(19) **Europäisches Patentamt / European Patent Office / Office européen des brevets**

(11) **EP 3 890 361 B1**

(12) **EUROPEAN PATENT SPECIFICATION**

(45) Date of publication and mention
of the grant of the patent:
**08.03.2023 Bulletin 2023/10**

(21) Application number: **19893019.0**

(22) Date of filing: **18.03.2019**

(51) International Patent Classification (IPC):
*H04W 4/02* (2009.01)     *H04W 24/10* (2009.01)
*H04W 64/00* (2009.01)     *G01S 1/00* (2006.01)
*G01S 5/00* (2006.01)     *G01S 5/02* (2006.01)
*G01S 5/14* (2006.01)

(52) Cooperative Patent Classification (CPC):
**G01S 5/0027; G01S 5/14; H04W 4/02;**
**H04W 24/10;** G01S 5/0242; H04W 64/003

(86) International application number:
**PCT/CN2019/078444**

(87) International publication number:
**WO 2020/113845 (11.06.2020 Gazette 2020/24)**

(54) **CELL LONGITUDE AND LATITUDE PREDICTION METHOD AND DEVICE, SERVER, BASE STATION, AND STORAGE MEDIUM**

ZELLENLÄNGENGRAD- UND -BREITENGRADVORHERSAGEVERFAHREN UND -VORRICHTUNG, SERVER, BASISSTATION UND SPEICHERMEDIUM

PROCÉDÉ ET DISPOSITIF DE PRÉDICTION DE LONGITUDE ET DE LATITUDE DE CELLULE, SERVEUR, STATION DE BASE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2018 CN 201811476242**

(43) Date of publication of application:
**06.10.2021 Bulletin 2021/40**

(73) Proprietor: **ZTE Corporation**
**Guangdong Province 518057 (CN)**

(72) Inventors:
• **LI, Yigang**
**Nanshan District Shenzhen,**
**Guangdong Province 518057 (CN)**

• **CHEN, Yunxiao**
**Nanshan District Shenzhen,**
**Guangdong Province 518057 (CN)**
• **FAN, Guotian**
**Nanshan District Shenzhen,**
**Guangdong Province 518057 (CN)**
• **SUN, Kaiwen**
**Nanshan District Shenzhen,**
**Guangdong Province 518057 (CN)**

(74) Representative: **Gevers Patents et al**
**Intellectual Property House**
**Holidaystraat 5**
**1831 Diegem (BE)**

(56) References cited:
**CN-B- 103 858 462**

EP 3 890 361 B1

## Description

TECHNICAL FIELD

The present invention relates to a technology for cell positioning in a mobile communication network, and in particular to a method and a device for predicting a latitude and longitude of a cell, the device being a server or a base station and a storage medium.

## BACKGROUND

Engineering parameters, also known as a base station information table, mainly include information such as latitude and longitude, antenna height, azimuth angle, and downtilt angle of the base station and the cell.

In the field of wireless network operation and maintenance, whether in network simulation, station addition, capacity expansion planning, or wireless network coverage analysis, an accuracy of work, for example, planning and optimization of networking parameters such as neighboring cells, scrambling codes and PCI, optimization of antenna azimuth and downtilt angles, and the like, depends heavily on the accuracy of engineering parameters. The large deviation of engineering parameters will lead to the poor effect of network optimization scheme and even the deterioration of network performance. In addition, the base station maintenance engineer needs to obtain accurate cell latitude and longitude information to find the exact position of RRU (Remote Radio Unit) and antenna, so as to facilitate equipment maintenance. Therefore, obtaining accurate cell latitude and longitude information is the basis of wireless network operation and maintenance.

In related technologies, the latitude and longitude information of the cell is usually measured and recorded on the spot by an engineer using a GPS handheld terminal when the base station is installed and opened. Since the process of measurement and recording by the engineer is purely performed manually, errors will inevitably occur.

In order to better perform network operation and maintenance and obtain accurate cell latitude and longitude information, operators need to conduct a general survey of the basic information of base station, which not only consume a lot of manpower and material resources, but also requires a lot of time. The survey is inefficient and may still go wrong because manual measurement and recording are still needed.

CN103858462 relates to a positioning method and base station. The positioning method includes steps as follows: configuring the base station by a configuration file obtained from an OSS after the base station being electrified; the base station obtaining three MDT measurement reports which are supplied to the base station by three UEs, wherein all of the three UEs are accessed in a cell managed by the base station; and positioning the base station by the three MED measurement reports without an engineering reconnaissance measurement operation or an GPS receiver.

## SUMMARY

Embodiments of the present invention provide a method and a device for predicting a latitude and longitude of a cell, a server, a base station, and a storage medium. The invention is set out in the appended set of claims

According to the method and device, for predicting the latitude and longitude of the cell, the server, the base station and the storage medium described above, screen is performed on the MR samples to determine the MR samples to be positioned, according to the position information and/or the TA corresponding to the MR samples carrying the GNSS information of the target cell within the set period, and the latitude and longitude of the target cell is predicted according to the position to be determined included in the target area determined by using the MR samples to be positioned. In this way, the actual position of the target cell can be predicted accurately without on-site measurement according to the distance relationship that may be satisfied by the position information carried in the MR samples to be positioned and the actual position of the corresponding target cell. The MR sample to be positioned is determined by screening the position information and/or TA corresponding to the collected MR sample, so that the method for predicting the latitude and longitude of the cell has no special requirements for the station type of the cell, and is suitable for the omnidirectional station, directional station, remote station, micro station, and room substation. With high measurement accuracy provided by the method for predicting the latitude and longitude of the cell, the calibration efficiency of the latitude and longitude of the cell in the engineering parameters is improved, thereby laying a good foundation for network operation and maintenance, and greatly reducing the measurement cost.

## BRIEF DESCRIPTION OF THE DRAWINGS

The accompanying drawings are used to provide a further understanding of the technical solution of the present invention, and constitute a part of the specification. Together with the embodiments of the present invention, the accompanying drawings are used to explain the technical solution of the present invention, and do not constitute a limitation to the technical solution of the present invention.

FIG. 1 is a schematic diagram of an application scenario according to a method for predicting a latitude and longitude of a cell in an embodiment of the present invention;
FIG. 2 is a schematic flowchart of a method for predicting the latitude and longitude of the cell in an embodiment of the present invention;
FIG. 3 is a schematic diagram of eliminating multipath MR samples in an embodiment of the present invention;
FIG. 4 is a schematic diagram of eliminating MR samples that carry inaccurate GNSS information and show obvious stand-alone characteristic in an embodiment of the present invention;
FIG. 5 is a schematic diagram of eliminating MR samples that carry inaccurate GNSS information and show non-obvious stand-alone characteristic in an embodiment of the present invention;
FIG. 6 is a schematic diagram of eliminating multipath MR samples in another embodiment of the present invention;
FIG. 7 is a schematic diagram of identifying and eliminating MR samples that carry inaccurate GNSS information and show obvious stand-alone characteristic in an embodiment of the present invention;
FIG. 8 is a schematic diagram of identifying and eliminating not-stand-alone MR samples that carry inaccurate GNSS information and show non-obvious stand-alone characteristic in an embodiment of the present invention;
FIG. 9 is a schematic diagram of determining a target area including a target cell according to an MR sample to be positioned in an embodiment of the present invention;
FIG. 10 is a schematic flowchart of a method for predicting the latitude and longitude of the cell in another embodiment of the present invention;
FIG. 11 is a schematic flowchart of a method for predicting the latitude and longitude of the cell in further embodiment of the present invention;
FIG. 12 is a schematic structural diagram of a device for predicting the latitude and longitude of the cell in an embodiment of the present invention;
FIG. 13 is a schematic structural diagram of a server in an embodiment of the present invention.

## DETAILED DESCRIPTION

The technical solution of the present invention is further elaborated below in conjunction with the accompanying drawings and specific embodiments of the specification. Unless otherwise defined, all technical and scientific terms used herein have the same meaning as commonly understood by those having ordinary skill in the art. The terms used in the specification of the present invention herein is only for the purpose of describing specific embodiments, and is not intended to limit the present invention. The term "and/or" as used herein includes any and all combinations of one or more related listed items.

In the following description, the expression "some embodiments" is involved, which describes a subset of all possible embodiments, but it should be understood that "some embodiments" may be the same subset or different subsets of all possible embodiments, and may be combined with each other without conflict.

Before further describing the present invention in detail, the phrases and terms involved in the embodiments of the present invention are described, and the phrases and terms involved in the embodiments of the present invention are applicable to the following explanations.

1) Base station, i.e. a public mobile communication base station, is a form of radio station, which refers to a radio transceiver station that transmits information with mobile phone terminals through mobile communication switching center in a certain radio coverage area. In a WCDMA (Wideband Code Division Multiple Access) network, NodeBID is usually used to identify different base stations under the same RNC (Radio Network Controller). In an LTE (Long Term Evolution) network, EnodeBID is usually used to identify different base stations in the same local network.
2) Cell is a wireless logical area that provides services to users. CellID is usually used to identify a unique cell under the same base station on the system side.
3) Measurement Report (MR) is the main means for obtaining terminal wireless information on the network side in a mobile communication system, and it mainly includes two parts: uplink measurement information and downlink measurement information. The downlink measurement information is measured and collected by the terminal and reported to the base station through the Measurement Report signaling of the air interface. The uplink measurement information is measured and collected by the base station. MR is classified into event type and periodic type. Periodic type of MR is usually used to evaluate indicators, such as coverage, interference, quality, performance, traffic volume and the like, of the network and is applied to wireless network planning and optimization based on evaluation results.
4) Timing Advanced (TA) refers to the difference between the actual time when the mobile station signal arrives at the base station and the time when the mobile station signal arrives at the base station assuming that the distance between the mobile station and the base station is zero. The base station always monitors the arrival time of the mobile station signal, and sends TA commands to the mobile station according to the change of the arrival time, so that the mobile station sends uplink information in advance, and the uplink information sent by the mobile station may be correctly received by the base station.

In the LTE standard, one TA unit represents that the distance between the mobile station and the base station is about 78 meters, and one TA contains 16 TSs (Time Slots), and the distance of each TS is about 4.9 meters.

5) Grid refers to the area determined according to position data. For example, the surface of the Earth is divided into an array of closely adjacent cells with uniform size. Each cell is defined by a row or column as a pixel or pel and contains a code identifying the attribute type or magnitude of the pixel. Therefore, the grid structure is a data organization that represents the distribution of spatial features or phenomena in a regular array, and each data in the organization represents the non-aggregate attribute characteristics of the features or phenomena. In the field of mobile communications, rasterization of MR and other data is a common means of wireless network data tools, which is usually used to geographically describe network coverage, quality, interference, performance, traffic and other characteristics in a cell.

In a mobile communication system, the latitude and longitude of the cell are usually used to describe the latitude and longitude of a radio remote unit (RRU). The RRU is a device that converts the baseband optical signal into a radio frequency signal and transmits the radio frequency signal to the antenna at the remote end. As a new type of distributed network coverage mode, by adopting RRU, large-capacity macro-cellular base stations are deployed in the available central computer room, i.e. the baseband part is processed centrally, the radio frequency module in the base station is extended to the remote radio unit via optical fiber and distributed on the station determined by the network plan.

The inventor of the present invention found in research that, during actual engineering installation, in order to reduce the signal loss caused by feeder transmission, the length of the feeder between the RRU and the antenna should be as short as possible. Therefore, the RRU is usually installed at a position next to or close to the antenna. As a result, the latitude and longitude of the cell may be considered to be equivalent to the latitude and longitude of the RRU and the latitude and longitude of the antenna. For scenarios where one cell corresponds to multiple RRUs, such as multiple RRU room substations, super cells, and high-speed rail stations, what needs to be positioned is actually the position of each RRU in the cell. For multiple RRU scenarios, each RRU needs to be positioned by default. When the base station is a non-RRU station, the longitude and latitude of the base station is equal or approximately equal to the longitude and latitude of each cell of the current base station, that is, the longitude and latitude of the cell is the longitude and latitude of the base band unit (BBU) of the base station to which the current cell belongs. When the base station is a RRU station, for example, Centralized Radio Access Network (CRAN) scenario, the latitude and longitude of the cell is different from the latitude and longitude of the BBU of the base station. In WCDMA network and Frequency Division Duplexing-Long Term Evolution (FDD-LTE) network, a GPS module is generally not installed on the BBU side of the base station, so that the position of the BBU cannot be obtained, let alone the position of the RRU.

In addition, in the Time Division Long Term Evolution (TD-LTE) system, it has very high requirements for clock synchronization. Therefore, most base stations are installed with GPS modules on the BBU, which is mainly for system clock synchronization and also may be used to measure and obtain the position information of the BBU. However, the position information of the BBU cannot be equal to the position information of the RRU because there are a large number of RRU stations in the mobile communication network. Therefore, the longitude and latitude of the BBU is not directly equivalent to the longitude and latitude of the cell, and cannot be directly applied to actual network operation and maintenance.

In light of this, by obtaining periodic measurement report (MR) data carrying Global Navigation Satellite System (GNSS) information, and according to a corresponding association relationship that may be inevitably satisfied between the distance represented by the TA determined by MR data corresponding to the actual position of the cell, the linear distance between the antenna and the terminal (UE), and the horizontal distance between the antenna and the UE, , whether the effective MR data of the target cell in the area to be predicted and the corresponding position to be determined meet the corresponding association relationship is judged to determine whether the position to be determined belongs to the actual position of the target cell, so as to further predict the longitude and latitude of the target cell based on the position to be determined.

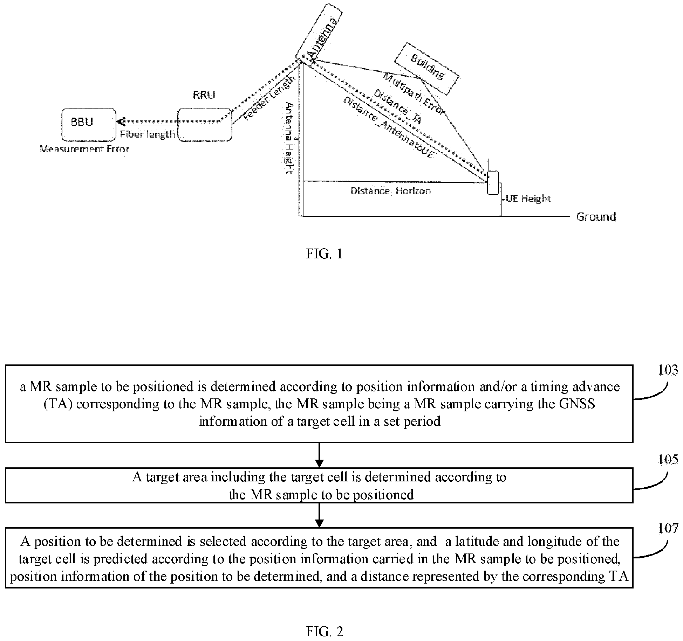

Referring to FIG. 1, the association relationship, that the distance represented by the TA determined by the MR data corresponding to the actual position of the cell, the linear distance between the antenna and the terminal (UE) and the horizontal distance between the antenna and the UE inevitably meet, is expressed by the following formula 1:

$$X = Distance\_TA - Distance\_AntennatoUE = Distance\_TA -$$
$$\sqrt{Distance\_Horizon^2 + (AntennaHeight - UEHeight)^2} =$$
$$Measurement\ Error + Fiber\ Length + Feeder\ Length + Multipath\ Error$$

(Formula 1)

In Formula 1, Distance_TA refers to the distance represented by the timing advance. The timing advance in the MR may be obtained and converted into the corresponding distance. The timing advance may be measured by the BBU, and the measurement reference point actually represents the distance from the BBU to the UE, including the fiber length from the BBU to the RRU, and the feeder length from the RRU to the antenna, and the propagation distance from the antenna to the UE.

Distance_Horizon refers to the horizontal distance between the antenna and the UE. After obtaining the latitude and longitude of the UE and the latitude and longitude of the cell in the MR, Distance_Horizon may be obtained by using the distance formula between two points.

Distance_AntennatoUE refers to the linear distance between the antenna and the UE. There is a height difference between the antenna height and the UE height, so the linear distance between the antenna and the UE (Distance_AntennatoUE) and the horizontal distance between the antenna and the UE (Distance _Horizon) are not completely equal, and the height difference between the antenna and the UE needs to be considered. The antenna height of each cell is different. After obtaining the relatively accurate antenna height of each cell, the association relationship between Distance_AntennatoUE and Distance_Horizon may be obtained by using the Pythagorean theorem formula and the formula is as follows:

$$Distance\_AntennatoUE =$$
$$\sqrt{Distance\_Horizon^2 + (AntennaHeight - UEHeight)^2}$$

Antenna Height refers to the height of the Antenna.

UE Height refers to the height of the UE. When the UE may report MR data containing GNSS information, the UE height is considered to be 1.5 m.

MultiPath Error refers to the error between the TA measurement value of the multipath propagation MR (referred to as multipath MR) reported by UE at a certain point due to signal reflection and refraction and the TA measurement value of the direct radiation path propagation MR (referred to as direct radiation path MR) reported by the UE at that point. The smaller the TA, the closer the UE is to the RRU, and the higher the probability of the direct radiation path is in the wireless signal propagation process, that is, the smaller the error between the signal propagation distance between the UE and the RRU converted by the TA and the actual distance between the UE and the RRU. Conversely, the larger the TA, the farther the UE is from the RRU, and the higher the probability of multipath is in the wireless signal propagation process, that is, the greater the error between the signal propagation distance between the UE and the RRU converted by the TA and the actual distance between the UE and the RRU. Generally, multipath errors cannot be completely avoided, and the wireless signal propagation environment is too complex to be accurately predicted. However, some methods may be used to identify and eliminate part of the multipath MR.

Measurement Error refers to the error generated by the base station when measuring TA. Affected by the sensitivity of system components and software algorithms, there are some errors in the system measurement TA itself. For a given BBU, the measurement error may be approximated as a fixed value.

Measurement Interval Error refers to the error of measurement interval. In the LTE system, one TA is about 78 meters and one TS is about 4.9 meters. Therefore, if the TA of two UEs measured in the same cell are equal, the largest error of the distance between the two UEs and the cell is about 78 meters; if the TA of the time slot of the two UEs measured in the same cell is the same, the maximum error of the distance between the two UEs and the cell is about 4.9 m. The measurement interval error cannot be avoided. In the embodiments of the present invention, because the measurement interval error of the time slot is relatively smaller, the TA of the time slot may be obtained when predicting the latitude and longitude of the cell, to avoid the influence of the measurement interval error on the prediction result.

Fiber Length refers to the fiber length from BBU to RRU. For RRU stations, the fiber length difference of each RRU under the same BBU may be relatively larger and cannot be accurately obtained. But for the same cell, the fiber length is fixed.

Feeder Length refers to the feeder length from the RRU to the antenna. Since the feeder length of each cell is different, and the feeder length of each cell is not accurately recorded when the base station is installed, the feeder length of each cell cannot be accurately obtained. But for the same cell, the feeder length is fixed.

Since Measurement Error, Fiber Length, and Feeder Length may be regarded as fixed values in a cell, for a designated cell, when only the direct radiation path MR are selected, and when and only when the predicted latitude and longitude of the cell is located at the actual position of the cell, the result of X calculated by each MR of the MR set in the cell according to formula 2 should theoretically be equal and a fixed value. That is, the association relationship between the distance represented by the TA determined by the MR data corresponding to the actual position of the cell, the linear distance between the antenna and the UE and the horizontal distance between the antenna and the UE must be satisfied may be represented by the following formula 2.

$$X = Distance\_TA - Distance\_AntennatoUE = Distance\_TA - \sqrt{Distance\_Horizon^2 + (AntennaHeight - UEHeight)^2} = Measurement\,Error + Fiber\,Length + Feeder\,Length$$

(Formula 2)

The calculation method of the degree of longitude and latitude corresponding to 1 meter is as follows. The radius of the Earth is R meters, and the circumference of the Earth at any longitude is $2*\Pi*R$ meters. Assuming that the current latitude is Latitude, the circumference of the Earth at Latitude is $R*cos(Latitude)$. Assuming R=6371000 meters, the circumference of the Earth at any longitude is $2*\Pi*6371000=40030174$ meters, so:

the actual latitude corresponding to 1 meter is $360°/40030173=0.00000899322°$.
the actual longitude corresponding to 1 meter is:
$360°/(40030173*cos(Latitude/180*\Pi))=0.00000899322°/cos(Latitude/180*\Pi)$.

Regarding the calculation method of the distance between two points when the longitude and latitude of the two points are known: Taking point 1 and point 2 as an example, the distance between point 1 and point 2 may be calculated by formula 3 according to the longitude and latitude of point 1 and point 2. The formula 3 is as follows:

$$Distance(Point1Point2)=arccos(sin(Lat1*\Pi/180)*sin(Lat2*\Pi/180)+cos(Lat1*\Pi/180)*cos(Lat2*\Pi/180)*cos(Lon2*\Pi/180 -Lon1*\Pi/180))*6371000 \quad (Formula\ 3)$$

herein: Point1 represents point 1, Point2 represents point 2; Lon1 and Lon2 represent the longitude of point 1, point 2 respectively; Lat1 and Lat2 represent the latitude of point 1, point 2 respectively; 6371000 is the approximate radius of the Earth, the unit is meter.

Referring to FIG. 2, a method for predicting the latitude and longitude of the cell provided by an embodiment of the present invention is shown, including the following steps:

In step 103, the MR sample to be positioned is determined according to the position information and/or the TA corresponding to the MR sample. Herein the MR sample is an MR sample that carries GNSS information of a target cell within a set period.

Herein, the MR data carrying GNSS information may be obtained by a terminal UE reporting GNSS information or a base station sending an RRC message in which a request, that the UE is asked for carrying GNSS information in the MR, is configured. Taking the UE reporting GNSS information described in the 3GPPT S36.331 and 36.355 protocols as an example, when a UE accesses the network, the UE Capability Information message reported by the UE is identified as "standaloneGNSS-Location-r10 supported" in the UE-BasedNetwPerfMeasParameters-r10 structure, which means that the UE supports the reporting of GNSS position information. The base station may request the UE to carry GNSS information in the MR by configuring the measConfig in the issued RRC Connection Reconfiguration message as: includeLocationInfo-r10 true. After the UE reports the GNSS information in the MR, the base station may record and save each of the MR carrying GNSS information through post-processing.

The length of the set period may be set according to the actual situation, and the main purpose is to ensure that the data volume of the collected MR samples is sufficient. For a macro base station, the set period is usually 3 days or more; for a micro station or a room substation, the set period is usually 5 days or more to ensure sufficient sample size and improve the accuracy of the calculation results.

The position information corresponding to the MR sample refers to the GNSS information reported by the UE.

The MR sample contains a base station number and a cell number. For multiple RRUs scenario in a cell, the cell number in the MR may refer to the number of each RRU, and the predicted latitude and longitude of the cell refer to the position of each RRU in the cell accordingly. The TA refers to the TA of a time slot. Herein, determining the MR sample to be positioned according to the position information and/or the TA corresponding to the MR sample mainly refers to: identifying and eliminating the multipath MR and the MR with inaccurate latitude and longitude according to the position information and/or the TA corresponding to the MR sample, to obtain the MRs with accurate latitude and longitude and direct radiation path as the MR samples to be positioned. The identification and elimination of multipath MR and the elimination of MR data with inaccurate latitude and longitude may be performed by the following methods:

First, multipath MRs with the same or similar position are eliminated according to the position information and the TA corresponding to the MR samples. For a MR set with the same or similar position but different TA in the MR data in which the UE contained in the target cell has reported GNSS information, removal of duplication processing is performed on the other MRs in the MR set by selecting the MR with the smallest TA.

Second, the MRs with inaccurate GNSS information and covering stand-alone points are identified and eliminated according to the position information corresponding to the MR sample. Whether the corresponding MR is a MR covering stand-alone points is determined by judging whether the density of other MR belonging to the same cell within a preset first threshold distance around MR is lower than a preset second threshold.

Third, the MRs with inaccurate cell latitude and longitude and without covering stand-alone points are identified and eliminated according to the position information and the TA corresponding to the MR sample. After the MR data of the target cell is rasterized, the MR corresponding to the TA with the highest proportion of MR sample points in each grid in the target cell is set as an MR with the highest confidence and the MR with the TA value closest to the one with the highest confidence is selected and set as an MR with a higher confidence among the MRs in the same grid belonging to the target cell. The MRs with a non-highest and non-higher confidence in each grid in the target cell are identified and eliminated.

Fourth, the multipath MR existed with a high probability is eliminated according to the TA corresponding to the MR sample. Since the larger the TA, the higher the probability of the multipath MR, the MR set with a relatively small TA is selected, and the remaining MRs are eliminated to ensure that the number of MR samples in the MR set meets a preset third threshold.

According to the position information and/or TA corresponding to the MR sample, the multipath MR is identified and eliminated and the MR data with inaccurate latitude and longitude are eliminated, which may reduce the calculation error introduced by multipath MR and the MR carrying inaccurate GNSS information to improve calculation accuracy. The MR sample to be positioned is determined according to the position information and/or the TA corresponding to the MR sample. When the predicted latitude and longitude of the target cell is located at the actual position of the target cell, the results in the result set, obtained by subtracting the linear distance between the antenna and the UE in the MR from the distance represented by the TA corresponding to the MR that reports the accurate latitude and longitude and has direct radiation path, are approximately equal and should be a fixed value.

In step 105, a target area including the target cell is determined according to the MR sample to be positioned.

By determining the MR samples to be positioned from the collected MR samples, and determining the target area including the target cell according to the MR samples to be positioned, a closed region including the actual position of the target cell and with an area as small as possible may be obtained, which may reduce the amount of calculation to predict the actual position of the target cell in the target area and improve the accuracy of the prediction result.

In step 107, a position to be determined is selected according to the target area, and the longitude and latitude of the target cell is predicted according to the position information carried in the MR sample to be positioned, the position information of the position to be determined, and the distance represented by the corresponding TA.

The position to be determined is selected according to the target area, and the position to be determined is taken as the assumed actual position of the target cell. The predicted longitude and latitude of the target cell is calculated by using the association relationship that must be satisfied by the distance represented by the TA determined by the MA data corresponding to the actual position of the cell, the linear distance between the antenna and the UE, and the horizontal distance between the antenna and the UE. Multiple positions to be determined may be selected according to a set rule. In the target area, position points to be determined may be found by traversal and iterative method. When the position points to be determined is used as the assumed actual position of the target cell, the results in the X set, calculated by each MR in the corresponding MRs to be positioned according to the association relationship, are approximately equal, so that the latitude and longitude of the target cell may be predicted through the position points to be determined.

In the foregoing embodiments, screen is performed on the MR samples to determine the MR samples to be positioned according to the position information and/or the TA corresponding to the MR samples of the target cell carrying GNSS information in the set period, and the latitude and longitude of the target cell is predicted according to the position to be determined included in the target area determined by using the MR samples to be positioned. In this way, the actual position of the target cell in the target area can be predicted accurately without on-site measurement by determining the target area according to the MR to be positioned, and using the association relationship that the position information carried in the MR sample to be positioned and the actual position of the target cell meet. The MR sample to be positioned is determined by screening the position information and/or the TA corresponding to the collected MR sample, so the method of predicting the latitude and longitude of the cell has no special requirements for the station type of the cell, and is suitable for station types such as omnidirectional stations, directional stations, remote stations, micro stations, and room substations. With high measurement accuracy provided by the method, the calibration efficiency of the latitude and longitude of the cell in engineering parameters is improved, thereby laying a good foundation for network operation and maintenance, and greatly reducing measurement costs.

In some embodiments, in the step 103, before determining the MR sample to be positioned according to the position information and/or the TA corresponding to the MR sample, the method further includes:
collecting the MR samples carrying the GNSS information of a target cell within a set period.

Herein, the collecting may be performed according to the MR sample data corresponding to the GNSS information reported by the UE, or the MR sample data corresponding to the GNSS information reported by the UE based on the configuration in the RRC message sent by the base station requesting the UE to carry the GNSS information in the MR.

In some embodiments, in step 103, determining the MR sample to be positioned according to the position information and/or the TA corresponding to the MR sample, includes:

determining the MR samples with positions meeting a set condition and having different TAs to form an MR set according to the position information and the TA corresponding to the MR sample;
performing removal of duplication processing according to whether the TA in the MR set meets a set requirement.

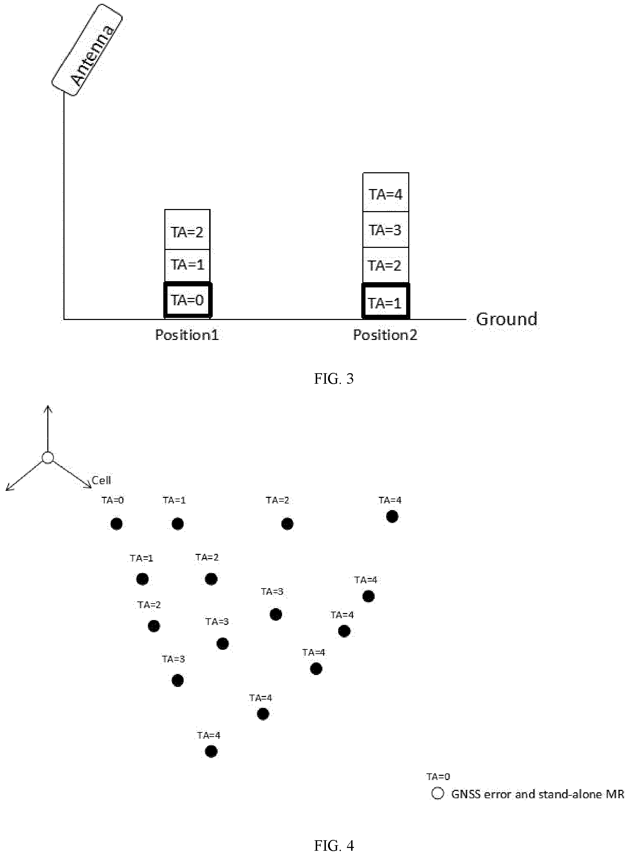

Here, the position meeting the set condition refers to that the position corresponding to the MR sample is the same or similar, which may be determined based on the GNSS information carried in the MR sample. The TA meeting the set requirement may refer to one or more of the relatively smaller TAs in the TA sorting. Referring to FIG. 3, in the same cell, the UE at the same position with the signal propagating in the direct radiation path between the antennas have the smallest TA. In the MR set formed by MR samples with the same or similar positions, removal of duplication processing, in which the MR with the smallest TA is selected and other MRs in the MR set are eliminated, is performed to eliminate multipath MR with the same or close position. Herein, performing removal of duplication processing according to whether the TA in the MR set meets the set requirement refers to removing other MRs except the smallest TA for the same MR set with the same or similar positions. For example, for the first position Position 1, the MR with the smallest TA (TA=0) is selected, and for the second position Position2, the MR with the smallest TA (TA=1) is selected.

In some embodiments, in step 103, determining the MR sample to be positioned according to the position information and/or the TA corresponding to the MR sample, includes:

taking the MR samples as MR samples to be identified respectively, and determining a distribution density of the MR samples contained within a first threshold distance relative to the MR samples to be identified according to the position information corresponding to the MR samples to be identified;
eliminating the MR sample to be identified according to whether the distribution density meets a set condition.

Herein, whether the distribution density meets the set condition may mean whether the distribution density is less than a preset distribution density threshold. By determining that the distribution density of the MR samples contained within the first threshold distance of a certain MR sample is less than the preset distribution density threshold, the corresponding MR sample may be considered to be a stand-alone MR and be eliminated.

For MR showing stand-alone characteristic, please refer to FIG. 4. In the MR of the same cell, the GNSS information carried by the MR reported by an individual UE is far away from the actual distance of the cell, and also far away from the distance represented by the TA reported by the MR. As shown in FIG. 4, the MR with TA=0 (GNSS error and stand-alone MR, carrying inaccurate GNSS information and showing obvious stand-alone characteristic) and represented by white dot does not conform to the law of association relationship between the position information carried by the MR and the actual position of the cell. These MRs are MRs showing obvious stand-alone characteristic. By determining the distribution density of the MR samples contained within the first threshold distance, the stand-alone MR samples are identified and eliminated. In this way, the MRs that actually carries inaccurate longitude and latitude information may be identified and eliminated to avoid the influence of introducing MR with inaccurate latitude and longitude on the prediction result of the actual position of the cell.

In some embodiments, in step 103, determining the MR sample to be positioned according to the position information and/or the TA corresponding to the MR sample includes:

rasterizing the MR samples, and establishing a correspondence relationship between each of the MR samples and a home grid;

determining a target TA according to a proportion of the number of MR samples in each of the grid, determining a target MR sample with a confidence meeting requirements according to the target TA, and eliminating other target MR samples except the target MR sample in the grid.

Herein, the target MR sample with the confidence meeting the requirement refer to one or more MR samples whose position information has relatively high confidence in each of the grid. As an optional embodiment, determining the target TA according to the proportion of the number of MR samples in each of the grid, and determining the target MR samples with the confidence meeting the requirement according to the target TA may include: taking the TA corresponding to the MR sample with highest proportion as the target TA, and taking the MR sample corresponding to the target TA as the MR with the highest confidence, and taking the MR sample whose TA is the nearest TA to the target TA in the same grid as the MR sample with higher confidence.

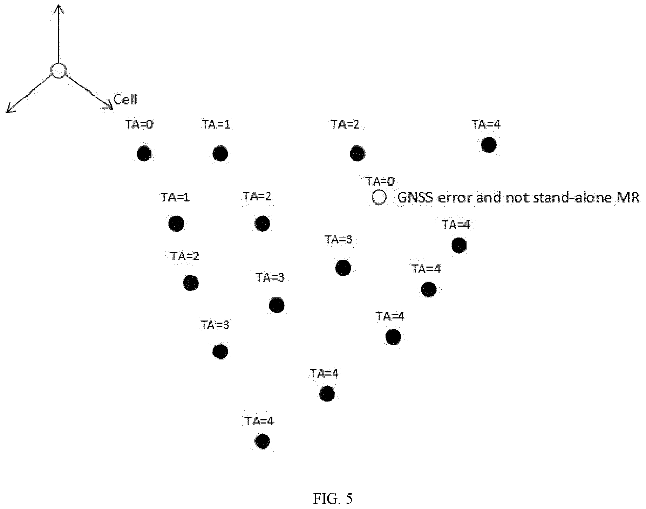

For MR samples with low confidence in the same grid, please refer to FIG. 5. In the MR of the same cell, the GNSS information carried by the MR reported by an individual UE has great difference with the actual distance of the cell and the distance represented by the TA reported by the MR. As shown in FIG. 5, the MR with TA=0 (GNSS error and not stand-alone MR, carrying inaccurate GNSS information and not showing obvious stand-alone characteristic) and represented by white dot does not conform to the law of association relationship between the position information carried by the MR and the actual position of the cell. The area around these MR samples contains other MR samples corresponding to many cells, and these MR samples are not stand-alone. Based on this, by taking the MR sample with the highest proportion of TA reported by UE within a close range as MR samples with the highest position confidence, taking the MR sample corresponding to the adjacent TA with the highest proportion of TA as the MR sample with higher position confidence, other MR samples except the MR sample with highest confidence and the MR sample with higher confidence are eliminated. In this way, the MRs without showing stand-alone characteristic and with inaccurate longitude and latitude information may be identified and eliminated to avoid the influence of introducing MR with inaccurate latitude and longitude on the prediction result of the actual position of the cell.

In some embodiments, in step 103, determining the MR sample to be positioned according to the position information and/or the TA corresponding to the MR sample, includes:

selecting a set number of target MR samples with a relatively small TA in the TA sorting according to the TA corresponding to the MR sample, and eliminating other MR samples except the target MR sample.

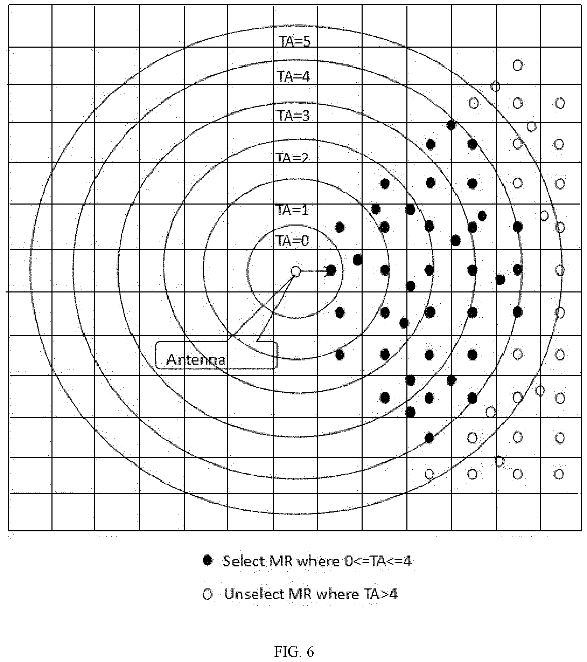

Herein, the set number may be adjusted according to the actual situation, and the size of the set number should ensure that the number of MR samples may meet the requirement of sampling accuracy. Referring to FIG. 6, generally, the larger the TA, the higher the probability that multipath MR samples will exist. As shown in FIG. 6, the MR samples with TA>4 are represented by white dots. A set number of target MR samples with a relatively small TA in the TA sorting are selected, and the MR with smaller TA is selected as the target sample from the MR samples. The number of the target MR samples corresponding to the target cell meets the preset number threshold, and the remaining MR samples are eliminated to eliminate MR samples with a relatively high probability of being multipath MR samples. In this way, under the condition that the number of MR samples is sufficient to calculate the cell position, MR data with a small TA is preferentially selected to reduce errors caused by multipath MR.

In some embodiments, in step 103, determining the MR sample to be positioned according to the position information and/or the TA corresponding to the MR sample, includes:

rasterizing the MR samples, and forming MR sets of the MR samples belonging to the same grid; performing removal of duplication processing on other MR samples in each of the MR sets except the MR sample with the smallest TA.

Herein, the MR samples are rasterized, and the size of the grid may be a set size, such as 10 meters. The position information corresponding to the MR samples belonging to the same grid is the same or similar. In the same cell, the UE at the same position with the signal propagating in the direct radiation path between the antennas have the smallest TA. From the MR set formed by MR samples with the same or similar positions, that is, from the MR set formed by the MRs belonging to the same grid, the MR with the smallest TA is selected and the other MRs in the MR set are eliminated to implement removal of duplication processing, so as to eliminate multipath MR with the same or close position.

The MR data of the target cell is rasterized, and the grid may be GridSize, and the grid size may be set according to TA. For example, the grid size may be set between 1TA and 2TA, and the corresponding relationship between each MR and the home grid may be established. The corresponding relationship may be recorded in a table, as shown in Table 1 below:

Table 1

| MR ID (MR identifier) | Grid ID (Grid identifier) | EnodeBID | CellID | TA | Longitude | Latitude |
|---|---|---|---|---|---|---|
|  |  |  |  |  |  |  |
|  |  |  |  |  |  |  |

In step 103, determining the MR sample to be positioned according to the position information and the TA corresponding to the MR sample, further includes:

selecting any grid as an initial grid, and determining a position of the initial grid;
determining the number of neighboring grids contained within a first threshold distance relative to a position of the initial grid, and eliminating the MR samples contained in the initial grid when it is determined that the number of neighboring grids is less than a preset value.

By selecting any grid as the initial grid, and counting the number of neighboring grids included in the first threshold distance around the initial grid, the distribution density of the corresponding MR samples around the initial grid is determined according to the number of the neighboring grids. When the number of neighboring grids is less than the preset value, that is, when the distribution density of the MR samples around the initial grid is small, it may be recognized that the MR points in the initial grid may be stand-alone points, so that the MR samples in the initial grid are eliminated. In this way, the stand-alone MR samples may be identified and eliminated through establishing grids and counting the number of neighboring grids of each grid. The MRs that actually contain inaccurate longitude and latitude information may be identified and eliminated in this process in order to avoid the influence of introducing MR with inaccurate latitude and longitude on the prediction result of the actual position of the cell.

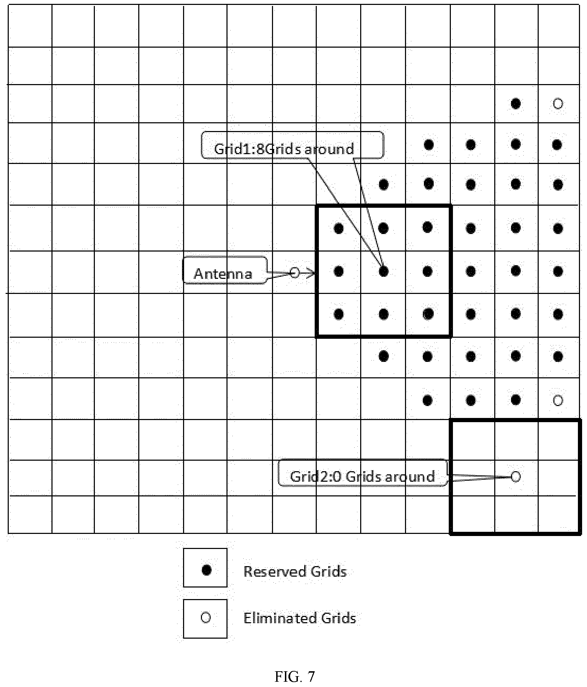

Referring to FIG. 7, the position of the initial grid may be determined by selecting the latitude and longitude of the center point of the corresponding grid as the position of the initial grid. For a grid, taking Grid1 in FIG. 7 as an example, there are 8 neighboring grids in a circle around the grid, in which the distance between the center point of 4 grids and the center point of the grid is GridSize, and the distance between the center point of the other 4 grids and the center point of the grid is GridSize* $\sqrt{2}$ , and a first threshold distance may be set between GridSize* $\sqrt{2}$ and GirdSize*2. It may be considered that there are 8 neighboring grids around the grid. As an optional embodiment, the first threshold distance may be GridSize* 1.5, and the preset value is 4. Taking Grid2 in FIG. 7 as an example, the number of neighboring grids within the first threshold distance from Grid2 is less than the preset value and the MR within the Grid2 show obvious stand-alone characteristic, and may be identified as MR carrying inaccurate latitude and longitude information and be eliminated.

In step 103, determining the MR sample to be positioned according to the position information and the TA corresponding to the MR sample, further includes:

counting a proportion of the TA corresponding to the MR samples contained in each of the grids;
determining a target TA according to the TA with the highest proportion, and eliminating other MR samples in each grid except the MR sample corresponding to the target TA.

Here, counting the proportion of the TA corresponding to the MR samples contained in each of the grids may refer to rounding the TA corresponding to the MR samples contained in each grid, for example, by removing the decimal part of the corresponding TA, or processing the decimal part of TA according to the rule of rounding up if five or greater and rounding down otherwise, to obtain the corresponding TA integer value, and the respective proportions of the rounded TA are counted. As another optional embodiment, when the size of the grid is small, counting the proportion of TA corresponding to the MR samples contained in each of the grids may also mean that the proportion of the TA corresponding to the MR samples contained in each of the grids is directly counted without rounding the TA to an integer. Determining the target TA according to the TA with the highest proportion may refer to directly taking the TA with the highest proportion as the target TA, or taking the TA with the highest proportion and the TA with a size similar to the TA with the highest proportion as the target TA.

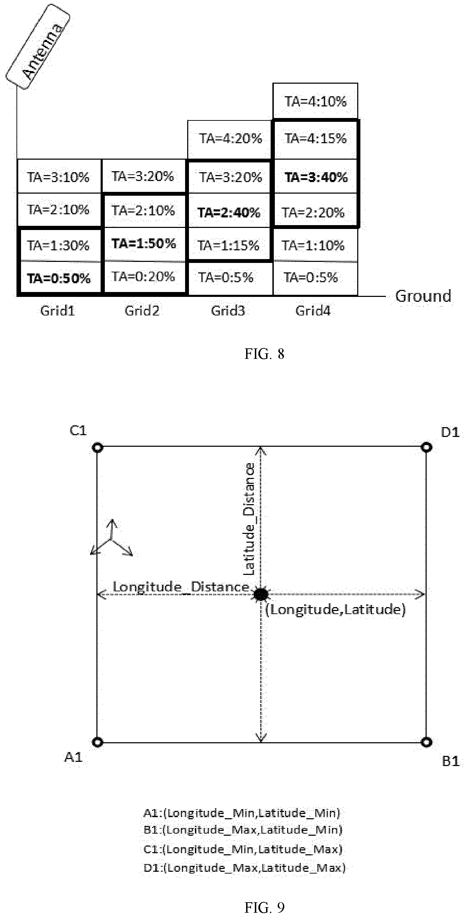

Referring to FIG. 8, as an optional embodiment, the TA integer value with the highest proportion of TA integer values in each of the grids may be selected and marked as TAmax. TAmax-1 and TAmax+1 which are similar in size to TAmax, are determined as the target TA according to TAmax and other MR samples in each of the grids except the corresponding TAmax, TAmax-1, and TAmax+1 are eliminated. Taking Grid1 in FIG. 8 as an example, TAmax is TA=0 with the highest proportion 50%, and TA=0 and TA=1 are selected respectively as the target TA. Then taking Grid2 as an example, TAmax is TA=1 with the highest proportion 50%, TA=0, TA=1 and TA=2 are selected respectively as the target TA. Then taking Grid3 as an example, TAmax is TA=2 with the highest proportion 40%, TA=1, TA=2 and TA=3 are selected respectively as the target TA. Then taking Grid4 as an example, TAmax is TA=3 with the highest proportion 40%, and TA=2, TA=3, and TA=4 are selected respectively as the target TA.

The target TA is determined by taking the TA with the highest proportion of the TA integer value corresponding to the same grid. By taking the MR sample with the highest proportion of TA reported by UE within a close range as MR samples with the highest position confidence, taking the MR sample corresponding to the neighboring TA with the highest proportion of TA as the MR sample with higher position confidence, other MR samples except the MR sample with highest confidence and the MR sample with higher confidence are eliminated. In this way, the MRs without showing obvious stand-alone characteristic and with inaccurate longitude and latitude information may be identified and eliminated to avoid influencing of introducing MR with inaccurate latitude and longitude on the prediction result of the actual position of the cell.

In step 103, determining the MR sample to be positioned according to the position information and the TA corresponding to the MR sample, further includes:

sorting the MR samples according to TA;
determining a set number of target MR samples with TA from small to large in the sorting, and eliminating other MR samples except the target MR samples.

Herein, the set number may be adjusted according to the actual situation, and the size of the set number should ensure that the number of MR samples may meet the requirement of sampling accuracy. As an optional embodiment, the number is set to 30. By sorting MR samples according to TA, MR samples are selected according to the TA value from small to large, until the number of selected MR samples reaches the set number. By selecting the set number of MR samples with TA from small to large in the sorting as the target MR samples, and eliminating other MR samples except the target MR samples, the MR samples with a relatively high probability of being multipath MR samples may be eliminated.

When the number of target MR samples corresponding to the target cell does not meet the requirement of the set number, the current prediction of the latitude and longitude of the target cell may be withdrawn to avoid that the number of effective target MR samples collected is insufficient to meet the precision requirement of predicting the latitude and longitude.

In some embodiments, in step 105, determining the target area including the target cell according to the MR sample to be positioned, includes:

determining initial position information and reference MR sample according to the TA corresponding to the MR sample to be positioned;
determining reference position information according to a distance between the reference MR sample and the initial position information;
extending positions with a first longitude distance and a first latitude distance respectively according to the reference position information, and obtaining the target area including the target cell according to the positions extended.

Herein, determining the initial position information according to the TA corresponding to the MR sample to be positioned may be implemented by calculating the average longitude Longitude_center and the average latitude Latitude_center according to the position information carried in the MR sample to be positioned, and taking the average longitude Longitude_center and the average latitude Latitude_cente as the initial position information. Determining the reference MR sample according to the TA corresponding to the MR sample to be positioned may refer to selecting the MR with the smallest TA among the MR samples to be positioned as the reference MR sample, and recording the number of reference MR samples n. Determining the reference position information according to the distance between the reference MR sample and the initial position information may refer to calculating the distance between the MR sample with the smallest TA and the average longitude Longitude_center and the average latitude Latitude_center, and sorting in ascending order of distance, finding out the latitude and longitude of the MR sample point corresponding to the median in the distance set, recording them as Longitude and Latitude, and using the Longitude and Latitude as reference position information respectively.

Obtaining the longitude and latitude of the MR sample point corresponding to the median in the distance set may include: if n is an odd number, finding the (n+1)/2th MR sample in the distance set sorted by the distance from small to large, and using the (n +1)/2th MR samples' latitude and longitude as the reference position information; if n is an even number, finding the n/2th MR sample in the distance set sorted from small to large, and using the latitude and longitude of the n/2th MR sample as the reference position information.

The positions are extended with the first longitude distance and the first latitude distance respectively according to the reference position information, the target area including the target cell is obtained according to the position extended, and a closed region including the actual position of the target cell and with an area as small as possible may be obtained.

Before extending positions with the first longitude distance and the first latitude distance respectively according to the reference position information, the method includes:

converting a distance represented by TA corresponding to the reference MR sample into longitude and latitude, and determining the first longitude distance and the first latitude distance according to the conversion result.

Converting the distance represented by the TA corresponding to the reference MR sample into longitude and latitude may refer to: converting the minimum distance Distance_min from the reference MR sample to the target cell into the degree of longitude and latitude, and determining the first longitude distance and the first distance based on the conversion result and recording as Longitude_Distance and Latitude_Distance respectively. The specific conversion formula of the first longitude distance and the first latitude distance may be as follows:

$$\text{Longitude\_Distance}=\text{Distance\_min}*0.00000899322/\cos(\text{Latitude})$$

$$\text{Latitude\_Distance}=\text{Distance\_min}*0.00000899322$$

Extending positions with the first longitude distance and the first latitude distance according to the reference position information means that the first longitude distance and the first latitude distance are respectively expanded to the east, west, south, and north with the reference position information as the center, so that the actual position of the target cell must be able to fall within the target area formed after the expansion. Referring to FIG. 9, as an optional embodiment, the first longitude distance Longitude_Distance is expanded to the east and west with the longitude Longitude in the reference position information as the center, and the first longitude distance Latitude _Distance is respectively expanded to the south and the north with the latitude Latitude in the reference position information as the center. The specific calculation formula may be as follows:

$$\text{Longitude\_Max}=\text{Longitude}+\text{Longitude\_Distance}$$

$$\text{Longitude\_Min}=\text{Longitude}-\text{Longitude\_Distance}$$

$$\text{Latitude\_Max}=\text{Latitude}+\text{Latitude\_Distance}$$

$$\text{Latitude\_Min}=\text{Latitude}-\text{Latitude\_Distance}$$

The latitude and longitude of the four corners of the target area expanded are A1: (Longitude_Min, Latitude _Min), B1: (Longitude _Max, Latitude _Min), C1: (Longitude _Min, Latitude _Max), D1: (Longitude_Max, Latitude_Max).

In some embodiments, selecting the position to be determined according to the target area, and predicting the latitude and longitude of the target cell according to the position information carried in the MR sample to be positioned, the position information of the position to be determined, and the distance represented by the corresponding TA, includes:

determining the position to be determined by taking one point in the target area as the origin point and a set distance as a step size;

determining a distance between an antenna and an terminal corresponding to each of the MR samples to be positioned according to the position information carried in the MR sample to be positioned and the position information of the position to be determined respectively;

determining a distance represented by the TA corresponding to the MR sample to be positioned;

determining a predicted distance between base stations corresponding to each of the MR samples to be positioned and the target cell according to the distance represented by the TA corresponding to each of the MR samples to be positioned and the corresponding distance between the antenna and the terminal, and forming a set of predicted distances corresponding to the position to be determined;

determining a predicted latitude and longitude of the target cell according to the set of predicted distances.

Herein, the step size may be set according to actual needs. The degree of longitude and latitude is converted accordingly according to the step size, and denoted as longitude step size Longitude _Y and latitude step size Latitude_Y. Taking step size Y as an example, the conversion formula of Longitude_Y and Latitude_Y may be shown as follows:

$$Longitude\_Y = Y*0.000000899322/cos(Latitude)$$

$$Latitude\_Y = Y*0.00000899322$$

Taking one point in the target area as the origin point may refer to selecting one of the corners corresponding to the target area, such as A1: (Longitude _Min, Latitude _Min) as the origin point. The position to be determined is determined by taking the longitude step Longitude _Y as the step size of longitude, and taking the latitude step Latitude Y as the step length of latitude respectively. The position to be determined is taken as the assumed actual position of the target cell, and iterative calculation is performed according to the association relationship that must be satisfied by the distance represented by the TA determined by the MR data corresponding to the actual position of the cell, the linear distance between the antenna and the terminal (UE), the horizontal distance between the antenna and the UE. The predicted distance between the base station corresponding to each MR sample to be positioned and the target cell is determined, and the set of predicted distances formed by the X value of each MR sample is obtained and denoted as {X1..Xm}[i][j].

Taking one iterative calculation as an example, the variables i and j may be set to represent the current iteration round corresponding to the longitude and latitude respectively, then the longitude of the current iteration round may be denoted as Longitude_Min+i*Longitude_Y, the latitude of the current iteration round may be denoted as Latitude_Min+j*Latitude_Y. The horizontal distance Distance_Horizon between the antenna and the UE is calculated according to the latitude and longitude of the position to be determined obtained in the current iteration round and the longitude and latitude information carried in the MR to be positioned. For each MR sample in the MRs to be positioned, according to the Pythagorean theorem, the linear distance between the antenna and the UE (Distance_AntennatoUE) is calculated by taking the difference between the antenna height and the UE height as a length of a shorter side of the right angel in a right-angled triangle, and the horizontal distance ( Distance_Horizon) between the antenna and the UE as a length of a longer side of the right angel in the right-angled triangle , and the formula is as follows:

$$Distance\_AntennatoUE = \sqrt{Distance\_Horizon^2 + (AntennaHeight - UEHeight)^2}$$

The TA corresponding to each MR sample in the MR sample to be positioned is converted into a distance *Distance_TA*, and the formula is: *Distance_TA=TA*78*. According to the distance represented by the TA corresponding to each MR sample and the distance from the corresponding antenna to the UE *Distance_AntennatoUE*, *X = Distance_TA - Distance_AntennatoUE* for each MR is calculated, the set of predicted distances formed by the X value of each MR sample is obtained and denoted as {X1..Xm}[i][j].

Determining the predicted longitude and latitude of the target cell according to the set of predicted distances may refer to: calculating the mean square error of the set of predicted distances for each iteration round, denoted as STDEV(X1..Xm)[i][j], selecting multiple iteration rounds with the smallest mean square error in all iteration rounds, such as the latitude and longitude of 3 rounds, and calculating the average value of the latitude and longitude of the multiple rounds respectively, and using the average value as the predicted longitude and latitude of the target cell. It should be noted that the number of multiple rounds with the smallest mean square error among all iteration rounds selected here may be multiple rounds of other numbers, and obtaining the predicted the longitude and latitude of the target cell according to the latitude and longitude of the position to be determined corresponding to the multiple iteration rounds is not limited to calculating the average value, which may also be determined by taking the median value or taking the latitude and longitude of a part of the position to be determined.

In some embodiments, the method for predicting the latitude and longitude of the cell further includes:

determining other cells belonging to the same position as the target cell;

determining a predicted longitude and latitude corresponding to multiple cells belonging to the same position according to the predicted longitude and latitude corresponding to the target cell and the predicted longitude and latitude corresponding to the other cells.

Here, when it is known that several cells are located at the same position, the predicted latitude and longitude of multiple cells located at the same position may be obtained by performing secondary processing for the set of corresponding predicted longitude and latitude results obtained by the set of cells located at the same position, such as averaging the predicted longitude and latitude of the cells located at the same position. In this way, by further adjusting the predicted longitude and latitude results of the target cell through the predicted longitude and latitude results corresponding to multiple cells belonging to the same position, the accuracy of the longitude and latitude predicted results of the target cell may be further improved.

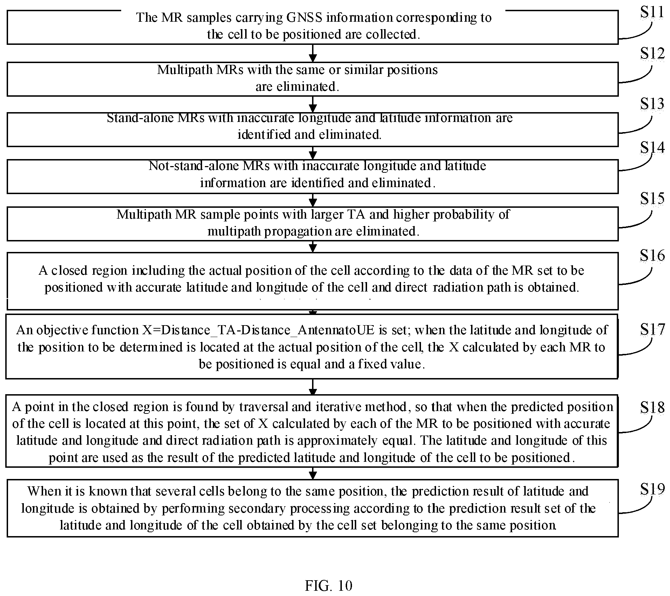

In order to be able to provide further understanding of the implementation process of the method for predicting the latitude and longitude of the cell provided in the embodiments of the present invention, the present invention describes in combination with two optional specific embodiments in the following. Referring to FIG. 10, the method for predicting the latitude and longitude of the cell includes the following steps.

In step S11, the MR samples carrying GNSS information corresponding to the cell to be positioned are collected and the cell to be positioned is the target cell.

In step S12, multipath MRs with the same or similar positions are eliminated. Removal of duplication processing is performed by selecting the MR corresponding to the smallest TA in the MR set formed by the MR data with the same or similar positions but different timing advance in the MR data of the cell to be positioned containing the longitude and latitude information reported by the user.

In step S13, the MRs with inaccurate longitude and latitude information and covering stand-alone points are identified and eliminated. The MRs covering stand-alone points are identified and eliminated by judging whether the density of other MRs belonging to the same cell and in the region within the first preset threshold distance around the MR is lower than the preset second threshold.

In step S14, the MRs that has inaccurate cell latitude and longitude and are not covering stand-alone points are identified and eliminated. After rasterizing the MR data of the cell, the MR corresponding to the TA with the highest proportion in the MR sample points in each grid of the cell is set as the MR with the highest confidence in the latitude and longitude, and among the MRs belonging to the same grid in the cell, the MR with the TA closest to the MR with the highest confidence in the latitude and longitude is selected as the MR with the higher confidence in the latitude and longitude. And other MRs with non-highest and non-higher confidence in the longitude and latitude in each grid of the cell are eliminated.

In step S15, the multipath MR sample points with larger TA and higher probability of multipath propagation are eliminated. The MR set with smaller TA is selected preferentially to generate the MR set to be positioned while ensuring that the number of sample points in the MR set to be positioned in the cell meets a preset third threshold. Then the remaining MR sample points are eliminated.

After the processing according to steps S12 to S15, the MR set to be positioned with accurate cell latitude and longitude and direct radiation path is obtained.

In step S16, a closed region including the actual position of the cell according to the data of the MR set to be positioned with accurate latitude and longitude of the cell and direct radiation path is obtained. Through determining the closed region according to the data of the MR set to be positioned with accurate latitude and longitude of the cell and direct radiation path, the actual position of the cell may definitely fall into the closed region, and the area of the closed region should be as small as possible.

In step S17, an objective function is set, and the objective function is as follows:

$$X = Distance\_TA - Distance\_AntennatoUE = Distance\_TA - \sqrt{Distance\_Horizon^2 + (AntennaHeight - UEHeight)^2} = Measurement\ Error + Fiber\ Length + Feeder\ Length + Multipath\ Error$$

When the latitude and longitude of the position to be determined is located at the actual position of the cell, the X calculated by each MR to be positioned is equal and a fixed value; Distance_TA is the distance represented by the timing advance; Distance_Horizon is the horizontal distance between the UE and the antenna of the cell. The latitude and longitude of the UE may be directly obtained in the MR. When the latitude and longitude of the cell is known, the Distance_Horizon may be obtained according to the calculation formula of the ground horizontal distance between the two points. Antenna Height is the height of the antenna; UE_Height is the height of the UE, which is set as 1.5 meters. Distance_AntennatoUE is the linear distance between the antenna and the UE and may be obtained according to the Pythagorean theorem that takes the horizontal distance between the antenna and the UE as a length of a shorter side of the right angel in a right-angled triangle and the height difference between the antenna and the UE as a length of a longer side of the right angel in the right-angled triangle. Measurement Error is the system measurement error; Fiber Length is the length of the optical fiber; Feeder Length is the length of the feeder. Since the system measurement error, fiber length, and feeder length are fixed values for the specified cell, when the predicted latitude and longitude of the cell is located at the actual position of the cell, the values in the set of X calculated by each of the MR to be positioned with accurate latitude and longitude and direct radiation path are approximately equal and should be a fixed value.

In step S18, one point in the closed region is found by traversal and iterative method, so that when the predicted position of the cell is located at this point, values in the set of X calculated by each of the MR to be positioned with accurate latitude and longitude and direct radiation path are approximately equal. The latitude and longitude of this point are used as the result of the predicted latitude and longitude of the cell to be positioned.

In step S19, when it is known that several cells belong to the same position, the prediction result of latitude and longitude is obtained by performing secondary processing according to the prediction result set of the latitude and longitude of the cell obtained by the cell set belonging to the same position.

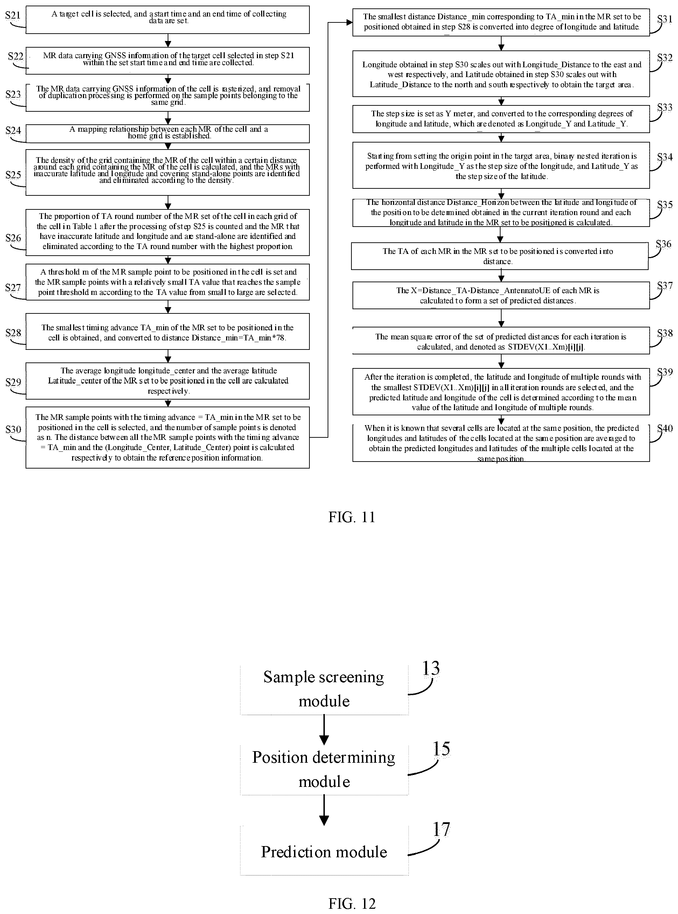

In another embodiment, referring to FIG. 11, the method for predicting a latitude and longitude of a cell includes the following steps:

In step S21, a target cell is selected, and a start time and an end time of collecting data are set. For macro stations, it is recommended to collect data for more than 3 consecutive days, and for micro stations and room substations, it is recommended to collect data for more than 5 days to ensure sufficient data volume and avoid calculation result errors caused by insufficient sample points.

In step S22, MR data carrying GNSS information of the target cell selected in step S21 within the set start time and end time are collected. The MR data needs to include the information, such as base station identifier, cell identifier, longitude, latitude, and timing advance of a time slot level.

In step S23, the MR data carrying GNSS information of the cell is rasterized, and removal of duplication processing is performed on the sample points belonging to the same grid. The grid size may be 10 meters, and the MR sample point with the smallest TA from the MR set in the same grid is selected, and other MR sample points except the MR sample point with the smallest TA are eliminated.

In step S24, a mapping relationship between each MR of the cell and a home grid is established. The MR data of the cell is rasterized, and the grid is denoted as GridSize, which may be between 1TA and 2TA, and specifically may be set as GridSize=90 meters. The establishment of the mapping relationship between each MR of the cell and the home grid may be as shown in Table 1 in the foregoing embodiment, which is not repeated here.

In step S25, the density of the grid containing the MR of the cell in a region within a certain distance around each grid containing the MR of the cell is calculated, and the MRs with inaccurate latitude and longitude and covering stand-alone points are identified and eliminated according to the density. If a number of neighboring grids containing the MR of the cell within a preset distance range around the grid containing the MR of the cell < a preset threshold, the MR points in the grid may be identified as stand-alone MRs, and these MR points may be eliminated from Table 1.

Referring to FIG. 7 again, the latitude and longitude of the center point of each grid in the corresponding grid graph may be taken to represent the position of each grid. For a certain grid, there are a total of 8 neighboring grids within a circle around the certain grid, the distance between the center point of 4 grids and the center point of the certain grid is GridSize, and the distance between the center point of the other 4 grids and the center point of the certain grid is GridSize* $\sqrt{2}$. Therefore, when the distance range threshold is set between GridSize* $\sqrt{2}$ and GirdSize*2, it may be considered that there are 8 neighboring grids around the certain grid. Therefore, the distance range threshold is recommended to be GridSize* 1.5, and the neighboring grid number threshold is recommended to be 4.

In step S26, the proportion of TA round number of the MR set of the cell in each grid of the cell in Table 1 after the processing of step S25 is counted and the MR with inaccurate latitude and longitude and without covering stand-alone points are identified and eliminated according to the TA round number with the highest proportion. Referring to FIG. 8 again, the TA integer value with the highest proportion in each grid may be taken and denoted as TAmax. In Table 1, the MR sample points corresponding to TA integer values except for TAmax-1, TAmax, and TAmax+1 in the MR sample points of the cell in each grid are eliminated.

In Step S27, a threshold m of the MR sample point to be positioned in the cell is set and the MR sample points with a relatively small TA value that reaches the sample point threshold m according to the TA value from small to large are selected. The sample point threshold may be selected as 30. It may be started from the MR with the smallest TA value in Table 1 when selecting the MR sample point with relatively small TA value according to the TA value from small to large until reaching the sample point threshold m. The MR sample points to be determined may be selected according to the TA value from small to large until the number of MR sample points to be positioned reaches the MR sample point threshold.

When the number of MR sample points to be positioned in the cell does not meet the requirement of the threshold m, the cell does not meet the accuracy requirements of positioning the latitude and longitude, and exits.

In step S28, the smallest timing advance TA_min of the MR set to be positioned in the cell is obtained, and converted to distance Distance_min=TA_min*78.

In step S29, the average longitude longitude_center and the average latitude Latitude_center of the MR set to be positioned in the cell are calculated respectively.

In step S30, the MR sample points with the timing advance = TA_min in the MR set to be positioned in the cell is selected, and the number of sample points is denoted as n. The distance between all the MR sample points with the timing advance = TA_min and the (Longitude _Center, Latitude _Center) point is calculated respectively to obtain the reference position information. The reference position may be sorted according to the distance from small to large, and the longitude and latitude of the MR sample point corresponding to the median of the distance set are found, and denoted as Longitude and Latitude.

The calculation method for obtaining the MR sample points corresponding to the median of the distance set may be: if n is an odd number, finding the (n+1)/2th MR record in the set sorted by distance from small to large, and if n is an even number, finding the n/2th MR record in the set sorted by distance from small to large.

In step S31, the smallest distance Distance_min corresponding to TA_min in the MR set to be positioned obtained in step S28 is converted into degree of longitude and latitude; the degree of longitude and latitude may be denoted as Longitude _Distance and Latitude_Distance, then:

$$Longitude\_Distance = Distance\_min * 0.00000899322/cos(Latitude)$$

$$Latitude\_Distance = Distance\_min * 0.00000899322$$

In step S32, Longitude obtained in step S30 scales out with Longitude_Distance to the east and west respectively, and Latitude obtained in step S30 scales out with Latitude_Distance to the north and south respectively to obtain the target area. Referring to FIG. 9 again, the actual position of the cell must fall within the target area formed after the expansion of the latitude and longitude respectively, namely:

$$Longitude\_Max = Longitude + Longitude\_Distance$$

$$Longitude\_Min = Longitude - Longitude\_Distance$$

$$Latitude\_Max = Latitude + Latitude\_Distance$$

$$Latitude\_Min = Latitude - Latitude\_Distance$$

The latitude and longitude of the four corners of the expanded rectangle are:

A1: (Longitude _Min,Latitude _Min)
B1: (Longitude _Max,Latitude_Min)
C1: (Longitude _Min,Latitude_Max)
D1: (Longitude _Max,Latitude_Max)

In step S33, the step size is set as Y meter, and is converted to the corresponding degrees of longitude and latitude, which are denoted as Longitude _Y and Latitude _Y. Y may be specifically selected as 5 meters, then:

$$Longitude\_Y = Y * 0.000000899322/cos(Latitude)$$

$$Latitude\_Y = Y * 0.00000899322$$

In step S34, starting from setting the origin point in the target area, binary nested iteration is performed with Longitude _Y as the step size of the longitude, and Latitude _Y as the step size of the latitude. A longitude and latitude is obtained in each iteration and denoted as i*Longitude_Min+j*Longitude_Y. Starting from the origin point (Longitude _Min, Latitude _Min), the positions to be determined may be selected in sequence with Longitude _Y as the step size of longitude, and Latitude _Y as the step size of longitude until (Longitude _Max, Latitude _Max) is selected. Variables i and j are set to represent the current iteration rounds of longitude and latitude, respectively. The longitude of one iteration round may be denoted as Longitude_Min+i*Longitude_Y, and the latitude of one iteration round may be denoted as Latitude _Min+j *Latitude_Y.

In step S35, the horizontal distance Distance_Horizon between the latitude and longitude of the position to be determined obtained in the current iteration round and each longitude and latitude in the MR set to be positioned is calculated.

For each MR in the set of MRs to be positioned, the linear distance from the antenna to the UE is calculated according to the Pythagorean theorem, using the difference between the antenna height and the UE height as a length of a shorter side of the right angel in a right-angled triangle, and the horizontal distance between the antenna and the UE Distance_Horizon as a length of a longer side of the right angel in the right-angled triangle. The formula is:

$$Distance\_AntennatoUE = \sqrt{Distance\_Horizon^2 + (AntennaHeight - UEHeight)^2}$$

In step S36, the TA of each MR in the MR set to be positioned is converted into distance; the conversion formula may be: *Distance_TA = TA * 78.*

In step S37, the *X = Distance_TA - Distance_AntennatoUE* of each MR is calculated to form a set of predicted distances; the set of predicted distances may be denoted as {X1..Xm}[i][j].

In step S38, the mean square error of the set of predicted distances for each iteration is calculated, and denoted as STDEV(X1..Xm)[i][j].

In step S39, after the iteration is completed, the latitude and longitude of multiple rounds with the smallest STDEV(X1..Xm)[i][j] in all iteration rounds are selected, and the predicted latitude and longitude of the cell is determined according to the average value of the latitude and longitude of multiple rounds. The latitude and longitude of the 3 rounds with the smallest mean square error among all iteration rounds may be selected, and the 3 longitudes and 3 latitudes may be averaged to obtain the predicted latitude and longitude of the cell.

In step S40, when it is known that several cells are located at the same position, the predicted longitudes and latitudes of the cells located at the same position are averaged to obtain the predicted longitudes and latitudes of the multiple cells located at the same position.

The method for predicting the latitude and longitude of the cell provided by the foregoing embodiments of the present invention may be performed on the mobile communication network system side, and relatively accurate cell latitude and longitude prediction results may be obtained from the system side without the need for on-site measurement. Since the prediction results of the latitude and longitude of the cell is obtained by collecting the MR data of the target cell, there is no special requirement for the station type of the cell, and it is applicable to the station types such as omnidirectional station, directional station, micro station, remote station, and indoor substation.

Field measurements proves that when the number of MR sample points to be positioned with accurate latitude and longitude of the cell and direct radiation path meets the preset threshold requirements, and the accurate antenna height of the cell may be obtained, the average accuracy of the obtained cell latitude and longitude using the technical solution provided in the present invention can reach about 20 to 40 meters, and the proportion of cells with an accuracy of less than 50 meters can reach about 80% to 90%.

As an optional application scenario of the predicted latitude and longitude result of the corresponding cell obtained by the method for predicting the latitude and longitude of the cell provided in the embodiment of the present invention, the longitude and latitude of the engineering parameters of the cell may be confirmed to be inaccurate when the distance between the predicted longitude and latitude of the cell and the longitude and latitude of the engineering parameters of the cell exceeds the confidence threshold of the prediction of the longitude and latitude accuracy provided by the embodiments of the present invention. Even if the actual longitude and latitude of the cell with inaccurate engineering parameters need to be measured on the site, the range of the cell that needs to be measured on the site in the operator's network can be greatly reduced, thereby greatly improving the efficiency of the latitude and longitude calibration of the engineering parameters, and laying a good foundation for network operation and maintenance.

On another aspect, the embodiments of the present invention provide a device for predicting a cell latitude and longitude of a cell. Referring to FIG. 12, the device for predicting the latitude and longitude of the cell includes: a sample screening module 13, configured to determine an MR sample to be positioned according to position information and/or a TA corresponding to an MR sample, the MR sample being an MR sample that carries GNSS information of a target cell within a set period; a position determining module 15, configured to determine a target area including the target cell according to the MR sample to be positioned; a prediction module 17, configured to select a position to be determined based on the target area, and predict the latitude and longitude of the target cell according to the position information carried in the MR sample to be positioned, position information of the position to be determined, and the distance represented by the corresponding TA.

In some embodiments, the sample screening module 13 is further configured to: determine the MR samples with positions meeting a set condition and having different TAs to form an MR set according to the position information and the TA corresponding to the MR sample; perform removal of duplication processing according to whether the TA in the MR set meets a set requirement.

In some embodiments, the sample screening module 13 is further configured to: take the MR samples as MR samples to be identified respectively, determine a distribution density of the MR samples contained with a first threshold distance relative to the MR samples to be identified according to the position information corresponding to the MR samples to be identified, and eliminate the MR sample to be identified according to whether the distribution density meets the set condition.

In some embodiments, the sample screening module 13 is further configured to: rasterize the MR samples, establish a corresponding relationship between each of the MR samples and a home grid, determine a target TA according to a proportion of the number of the MR samples in each of the grids, determine a target MR sample with a confidence meeting requirements according to the target TA, and eliminate other MR samples except the target MR sample in the grid.

In some embodiments, the sample screening module 13 is further configured to: select a set number of target MR samples with a relatively small TA in the TA sorting, according to the TA corresponding to the MR sample, and eliminate other MR samples except the target MR sample.

In some embodiments, the sample screening module 13 is further configured to: rasterize the MR samples, form MR sets with the MR samples belonging to the same grid, perform removal of duplication processing on other MR samples in each of the MR sets except the MR sample with the smallest TA.

The sample screening module 13 is further configured to select any grid as an initial grid, determine a position of the initial grid, determine the number of neighboring grids contained within a first threshold distance relative to the position of the initial grid, eliminate the MR samples contained in the initial grid when it is determined that the number of neighboring grids is less than a preset value.

The sample screening module 13 is further configured to: count a proportion of the corresponding TA in the MR samples contained in each of the grid, determine a target TA according to the TA with the highest proportion, and eliminate other MR samples in each of the grid except the MR sample corresponding to the target TA.

The sample screening module 13 is further configured to sort the MR samples according to TA, determine a set number of target MR samples with TA from small to large in the sorting, and eliminate other MR samples except the target MR samples.

In some embodiments, the position determining module 15 is further configured to: determine initial position information and reference MR sample according to the TA corresponding to the MR sample to be positioned, determine reference position information according to a distance between the reference MR sample and the initial position information, extend positions with a first longitude distance and a first latitude distance respectively according to the reference position information and obtain the target area including the target cell according to the positions extended.

In some embodiments, the position determining module 15 is further configured to convert a distance represented by TA corresponding to the reference MR sample into longitude and latitude, and determine the first longitude distance and the first latitude distance according to the conversion result.

In some embodiments, the prediction module 17 is further configured to: determine the position to be determined respectively by taking one point in the target area as an origin point and a set distance as a step size, determine distances between antennas and terminals corresponding to each of the MR samples to be positioned according to the position information carried in the MR sample to be positioned and the position information of the position to be determined respectively; determine a distance represented by the TA corresponding to the MR sample to be positioned; determine predicted distances between base stations corresponding to each of the MR samples to be positioned and the target cell according to the distance represented by the TA corresponding to each of the MR sample to be positioned and the corresponding distance between the antenna and the terminal to form a set of the predicted distances corresponding to the position to be determined; and determine predicted longitude and latitude of the target cell according to the set of the predicted distances.

When predicting the latitude and longitude of the cell according to the device for predicting the latitude and longitude of the cell provided in the above embodiments, the division of the above-mentioned program modules is only taken as an example. In practical applications, the above-mentioned steps may be allocated to different program modules to complete according to needs. That is, the internal structure of the device may be divided into different program modules to complete all or part of the processing described above. In addition, the device for predicting the latitude and longitude of the cell provided in the foregoing embodiment belongs to the same concept as the embodiments of the method for predicting the latitude and longitude of the cell, and the specific implementation process is detailed in the method embodiments, and will not be repeated here.

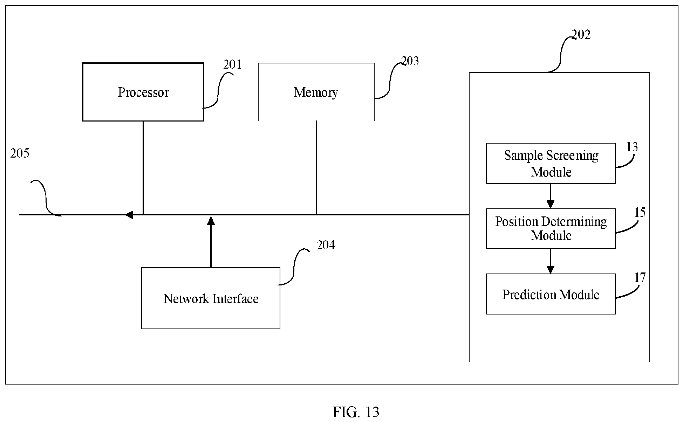

On the other hand, the embodiments of the present invention also provide a server that may perform network communication with the mobile communication network system side, such as performing network communication with a base station on the mobile communication network system side, and receiving MR sample data collected by the mobile communication network system side, to predict the latitude and longitude of the cell by executing the method for predicting the latitude and longitude of the cell provided in the embodiment of the present invention based on the MR sample data. Referring to FIG. 13, the server includes a processor 201 and a storage medium 202 for storing a computer program that may run on the processor 201, where the processor 201 is configured to implement the step of the method for predicting the latitude and longitude of the cell provided by any embodiment of the present invention when running the computer program. Here, the processor 201 and the storage medium 202 do not mean that the corresponding number is one, but may be one or more. The server further includes a memory 203, a network interface 204, and a system bus 205 connecting the processor 201, the memory 203, the network interface 204, and the storage medium 202. The storage medium 202 stores an operating system and a device for predicting the latitude and longitude of the cell used to implement the memory cache management method provided in the embodiments of the present invention. The processor 201 is used to improve calculation and control capabilities and support the operation of the entire server. The memory 203 is used to provide an environment for the operation of the memory cache management method in the storage medium 202. The network interface 204 is configured to communicate with the base station and receive or send data, such as obtaining MR sample data collected by the base station and returning the predicted results of the latitude and longitude of the cell, etc..

In still another aspect, the embodiments of the present invention also provide a base station. The base station analyzes the collected MR sample data to execute the method for predicting the latitude and longitude of the cell provided in the embodiments of the present invention to predict the latitude and longitude of the cell based on the MR sample data. The base station includes a processor and a storage medium for storing a computer program that may run on the processor, the processor is configured to implement the step of the method for predicting the cell latitude and longitude provided by any embodiment of the present invention when running the computer program.

The embodiments of the present invention also provide a storage medium, for example, including a memory storing a computer program, and the computer program may be executed by a processor to implement the steps of the dispersion estimation method provided in any embodiment of the present invention. The storage medium may be FRAM, ROM, PROM, EPROM, EEPROM, Flash Memory, magnetic surface memory, optical disk, or CD-ROM, etc.; it may also be various devices including one or any combination of the foregoing memories.

Although the invention has been explained in relation to its preferred embodiment(s) as mentioned above, it is to be understood that many other possible modifications and variations can be made without departing from the scope of the present invention, which is defined by the claims.

**Claims**

1. A method for predicting a latitude and longitude of a cell, comprising:

   determining (103) measurement report, MR, samples to be positioned according to position information and/or a timing advance, TA, corresponding to each of the MR samples, wherein each MR sample is an MR sample that carries global navigation satellite system, GNSS, information of a target cell within a set period, wherein the MR samples to be positioned are obtained by excluding, from the MR samples, multipath MR samples and MR samples that carry inaccurate GNSS information;
   determining (105) a target area comprising the target cell according to the MR samples to be positioned;
   selecting (107) a position to be determined according to the target area, wherein the position to be determined is one or more positions in the target area and used for determining a latitude and longitude of the target cell, wherein the one or more positions are sequentially determined by traversing positions in the target area in a step size; and
   predicting (107) the latitude and longitude of the target cell according to the position information carried in each of the MR samples to be positioned, position information of the position to be determined, and a distance represented by a corresponding TA in each of the MR samples to be positioned.

2. The method according to claim 1, wherein determining the MR samples to be positioned according to the position information and/or the TA corresponding to each of the MR samples comprises:

   determining the MR samples with positions meeting a set condition and having different TAs to forming a plurality of MR sets according to the position information and the TA corresponding to each of the MR samples; and
   performing removal of duplication processing according to whether the TA in each MR set meets a set requirement.

3. The method according to claim 1, wherein determining the MR samples to be positioned according to the position information and/or the TA corresponding to each of the MR samples comprises:

taking the MR samples as MR samples to be identified respectively;
determining a distribution density of MR samples contained within a first threshold distance relative to a respective MR sample to be identified according to the position information corresponding to the respective MR sample to be identified; and
determining whether to eliminate the respective MR sample to be identified according to whether the distribution density meets a set condition.

4. The method according to claim 1, wherein determining the MR samples to be positioned according to the position information and/or the TA corresponding to each of the MR samples comprises:

rasterizing the MR samples, and establishing a corresponding relationship between a respective MR sample and a grid to which the respective MR sample belongs; and
determining a target TA according to a proportion of the number of the MR samples in a respective grid, determining target MR samples each having a confidence meeting a requirement according to the target TA, and eliminating other MR samples except the target MR sample in the respective grid.

5. The method of claim 1, wherein determining the MR samples to be positioned according to the position information and/or the TA corresponding to each of the MR samples comprises:
selecting a set number of target MR samples with relatively small TAs in a TA sorting according to the TA corresponding to each of the MR samples, and eliminating other MR samples except the target MR samples.

6. The method of claim 1, wherein determining the MR samples to be positioned according to the position information and the TA corresponding to each of the MR samples comprises:

rasterizing the MR samples, and determining MR samples belonging to a same grid as an MR set; and
performing removal of duplication processing on other MR samples in the same MR set except an MR sample with a smallest TA.

7. The method of claim 6, wherein determining the MR samples to be positioned according to the position information and the TA corresponding to each of the MR samples further comprises:

selecting any grid as an initial grid, and determining a position of the initial grid;
determining the number of neighboring grids contained within a first threshold distance relative to the position of the initial grid, and eliminating the MR samples contained in the initial grid when it is determined that the number of neighboring grids is less than a preset value.

8. The method according to claim 7, wherein determining the MR samples to be positioned according to the position information and the TA corresponding to each of the MR samples further comprises:

counting a proportion of each of TAs respectively corresponding to the MR samples contained in each grid; and
determining a target TA according to the TA with the highest proportion, and eliminating other MR samples in each grid except the MR sample corresponding to the target TA.

9. The method according to claim 8, wherein determining the MR samples to be positioned according to the position information and the TA corresponding to each of the MR samples further comprises:

sorting the MR samples according to the TA corresponding to each of the MR samples;
determining a set number of target MR samples, wherein TAs in the target MR samples are relatively small in a sorting; and
eliminating other MR samples except the target MR samples.

10. The method according to any one of claims 1 to 9, wherein determining a target area comprising the target cell according to the MR samples to be positioned comprises:

determining initial position information and a plurality of reference MR samples according to the TA corresponding to each of the MR samples to be positioned;

determining reference position information according to a distance between each of the plurality of reference MR samples and the initial position information; and

extending a first longitude distance and a first latitude distance respectively according to the reference position information, and obtaining the target area comprising the target cell according to an extended area.

11. The method of claim 10, wherein before extending the first longitude distance and the first latitude distance respectively according to the reference position information, the method comprises:
converting a distance represented by each of TAs corresponding to the plurality of reference MR samples into a longitude and a latitude, and determining the first longitude distance and the first latitude distance according to conversion results.

12. The method according to any one of claims 1 to 9, wherein selecting the position to be determined according to the target area, and predicting the latitude and longitude of the target cell according to the position information carried in each of the MR samples to be positioned, the position information of the position to be determined, and the distance represented by the corresponding TA, comprises:

determining the position to be determined by taking a position in the target area as an origin point and a set distance as the step size;

determining a distance between an antenna and a terminal corresponding to each of the MR samples to be positioned respectively according to the position information carried in each of the MR samples to be positioned and the position information of the position to be determined;

determining a distance represented by the TA corresponding to each of the MR samples to be positioned;

determining a predicted distance between a base station and the target cell corresponding to each of the MR samples to be positioned according to the distance represented by the TA corresponding to each of the MR samples to be positioned and the distance between the antenna and the terminal corresponding to each of the MR samples to be positioned, to form a set of predicted distances corresponding to the position to be determined; and

determining a predicted latitude and longitude of the target cell according to the set of the predicted distances.

13. The method according to any one of claims 1 to 9, further comprising:

determining other cells belonging to the same position as the target cell; and

determining a predicted longitude and latitude corresponding to multiple cells belonging to the same position according to the predicted longitude and latitude corresponding to the target cell and a predicted longitude and latitude corresponding to the other cells.

14. A device, comprising a processor and a memory for storing a computer program executable on the processor; wherein,

the processor implements the method for predicting a latitude and longitude of a cell according to any one of claims 1 to 13 when the processor is configured to execute the computer program, wherein the device is a base station or a server.

15. A computer-readable storage medium, wherein executable instructions are stored in the storage medium, and the executable instructions, when executed by a processor, implement the method for predicting a latitude and longitude of a cell according to any one of claims 1 to 13.

**Patentansprüche**

1. Ein Verfahren zur Vorhersage des Breitengrads und Längengrads einer Zelle, umfassend:

Bestimmen (103) von Messbericht-, MR-, Abtastwerten, die gemäß Positionsinformationen und/oder einem Zeitvorsprung, TA, entsprechend jedem der MR-Abtastwerte zu positionieren sind, wobei jeder MR-Abtastwert ein MR-Abtastwert ist, der globale Navigationssatellitensystem-, GNSS-, Informationen einer Zielzelle innerhalb eines festgelegten Zeitraums beinhaltet, wobei die zu positionierenden MR-Abtastwerte erhalten werden, indem aus den MR-Abtastwerten Mehrweg-MR-Abtastwerte und MR-Abtastwerte ausgeschlossen werden, die ungenaue GNSS-Informationen beinhalten;

Bestimmen (105) eines Zielbereichs, der die Zielzelle umfasst, gemäß den zu positionierenden MR-Abtastwerten;

Auswählen (107) einer gemäß dem Zielbereich zu bestimmenden Position, wobei die zu bestimmende Position eine oder mehrere Positionen in dem Zielgebiet ist und zum Bestimmen eines Breitengrads und Längengrads der Zielzelle verwendet wird, wobei die eine oder mehreren Positionen sequentiell durch Durchlaufen von Positionen in dem Zielgebiet in einer Schrittgröße bestimmt werden; und

Vorhersagen (107) des Breitengrads und Längengrads der Zielzelle gemäß den Positionsinformationen, die in jedem der zu positionierenden MR-Abtastwerten, den Positionsinformationen der zu bestimmenden Position und einem Abstand, der durch einen entsprechenden TA in jedem der zu positionierenden MR-Abtastwerte dargestellt wird, beinhaltet sind.

2. Das Verfahren nach Anspruch 1, wobei das Bestimmen der zu positionierenden MR-Abtastwerte gemäß den Positionsinformationen und/oder dem TA, der jedem der MR-Abtastwerte entspricht, Folgendes umfasst:

Bestimmen der MR-Abtastwerte mit Positionen, die eine festgelegte Bedingung erfüllen und unterschiedliche TAs aufweisen, um eine Vielzahl von MR-Sätzen gemäß den Positionsinformationen und dem TA zu bilden, der jedem der MR-Abtastwerte entspricht; und

Durchführen von Beseitigung von Doppelverarbeitung je nachdem, ob der TA in jedem MR-Satz eine festgelegte Anforderung erfüllt.

3. Das Verfahren nach Anspruch 1, wobei das Bestimmen der zu positionierenden MR-Abtastwerte gemäß den Positionsinformationen und/oder dem TA, der jedem der MR-Abtastwerte entspricht, Folgendes umfasst:

Hernehmen der MR-Abtastwerte jeweils als zu identifizierende MR-Abtastwerte;

Bestimmen einer Verteilungsdichte von MR-Abtastwerten, die innerhalb eines ersten Schwellenwertabstands relativ zu einem jeweiligen zu identifizierenden MR-Abtastwert enthalten sind, gemäß den Positionsinformationen, die dem jeweiligen zu identifizierenden MR-Abtastwert entsprechen; und

Bestimmen, ob der jeweilige zu identifizierende MR-Abtastwert zu eliminieren ist, je nachdem, ob die Verteilungsdichte eine festgelegte Bedingung erfüllt.

4. Das Verfahren nach Anspruch 1, wobei das Bestimmen der zu positionierenden MR-Abtastwerte gemäß den Positionsinformationen und/oder dem TA, der jedem der MR-Abtastwerte entspricht, Folgendes umfasst:

Rastern der MR-Abtastwerte und Herstellen einer entsprechenden Beziehung zwischen einem jeweiligen MR-Abtastwert und einem Raster, zu dem der jeweilige MR-Abtastwert gehört; und

Bestimmen eines Ziel-TA gemäß einem Anteil der Anzahl der MR-Abtastwerte in einem jeweiligen Raster, Bestimmen von Ziel-MR-Abtastwerten, die jeweils eine Konfidenz aufweisen, die eine Anforderung gemäß dem Ziel-TA erfüllt, und Eliminieren anderer MR-Abtastwerte mit Ausnahme des Ziel-MR-Abtastwerts in dem jeweiligen Raster.

5. Das Verfahren nach Anspruch 1, wobei das Bestimmen der zu positionierenden MR-Abtastwerten gemäß den Positionsinformationen und/oder dem TA, der jedem der MR-Abtastwerte entspricht, Folgendes umfasst:
Auswählen einer festgelegten Anzahl von Ziel-MR-Abtastwerten mit relativ kleinen TAs in einer TA-Sortierung gemäß dem TA, der jedem der MR-Abtastwerte entspricht, und Eliminieren anderer MR-Abtastwerte mit Ausnahme der Ziel-MR-Abtastwerte.

6. Das Verfahren nach Anspruch 1, wobei das Bestimmen der zu positionierenden MR-Abtastwerte gemäß den Positionsinformationen und dem TA, der jedem der MR-Abtastwerte entspricht, Folgendes umfasst:

Rastern der MR-Abtastwerte und Bestimmen von MR-Abtastwerten, die zu demselben Raster wie ein MR-Satz gehören; und

Durchführen von Beseitigung von Doppelverarbeitung bei anderen MR-Abtastwerten in demselben MR-Satz mit Ausnahme eines MR-Abtastwerts mit einem kleinsten TA.

7. Das Verfahren nach Anspruch 6, wobei das Bestimmen der zu positionierenden MR-Abtastwerte gemäß den Positionsinformationen und dem TA, der jedem der MR-Abtastwerte entspricht, weiter umfasst:

Auswählen eines beliebigen Rasters als Ausgangsraster und Bestimmen einer Position des Ausgangsrasters; Bestimmen der Anzahl der benachbarten Raster, die innerhalb eines ersten Schwellenwertabstands relativ zur Position des Ausgangsrasters enthalten sind, und Eliminieren der im Ausgangsraster enthaltenen MR-Abtastwerte, wenn bestimmt wird, dass die Anzahl der benachbarten Raster kleiner als ein voreingestellter Wert ist.

**8.** Das Verfahren nach Anspruch 7, wobei das Bestimmen der zu positionierenden MR-Abtastwerte gemäß den Positionsinformationen und dem TA, der jedem der MR-Abtastwerte entspricht, weiter umfasst:

Zählen eines Anteils jedes der TAs, die den in jedem Raster enthaltenen MR-Abtastwerten entsprechen; und Bestimmen eines Ziel-TA gemäß dem TA mit dem höchsten Anteil und Eliminieren anderer MR-Abtastwerte in jedem Raster mit Ausnahme des MR-Abtastwerts, der dem Ziel-TA entspricht.

**9.** Das Verfahren nach Anspruch 8, wobei das Bestimmen der zu positionierenden MR-Abtastwerte gemäß den Positionsinformationen und dem TA, der jedem der MR-Abtastwerte entspricht, weiter umfasst:

Sortieren der MR-Abtastwerte gemäß dem TA, der jedem der MR-Abtastwerte entspricht; Bestimmen einer festgelegten Anzahl von Ziel-MR-Abtastwerten, wobei die TAs in den Ziel-MR-Abtastwerten in einer Sortierung relativ klein sind; und Eliminieren anderer MR-Abtastwerte mit Ausnahme der Ziel-MR-Abtastwerte.

**10.** Das Verfahren nach einem der Ansprüche 1 bis 9, wobei das Bestimmen eines Zielbereichs, der die Zielzelle umfasst, gemäß den zu positionierenden MR-Abtastwerten Folgendes umfasst:

Bestimmen von Ausgangspositionsinformationen und einer Vielzahl von Referenz-MR-Abtastwerten gemäß dem TA, der jedem der zu positionierenden MR-Abtastwerte entspricht; Bestimmen von Referenzpositionsinformationen gemäß einem Abstand zwischen jeder der Vielzahl von Referenz-MR-Abtastwerten und den Ausgangspositionsinformationen; und Erweitern eines ersten Längengradabstands bzw. eines ersten Breitengradabstands gemäß den Referenzpositionsinformationen und Erhalten des Zielbereichs, der die Zielzelle gemäß einem erweiterten Bereich umfasst.

**11.** Das Verfahren nach Anspruch 10, wobei das Verfahren vor dem Erweitern des ersten Längengradabstands bzw. des ersten Breitengradabstands gemäß den Referenzpositionsinformationen Folgendes umfasst: Konvertieren eines Abstands, der durch jeden der TAs dargestellt wird, die der Vielzahl von Referenz-MR-Abtastwerten entsprechen, in einen Längengrad und einen Breitengrad, und Bestimmen des ersten Längengradabstands und des ersten Breitengradabstands gemäß den Konvertierungsergebnissen.

**12.** Das Verfahren nach einem der Ansprüche 1 bis 9, wobei das Auswählen der zu bestimmenden Position gemäß dem Zielbereich und das Vorhersagen des Breitengrads und Längengrads der Zielzelle gemäß den Positionsinformationen, die in jedem der zu positionierenden MR-Abtastwerte beinhaltet sind, den Positionsinformationen der zu bestimmenden Position und dem Abstand, der durch den entsprechenden TA dargestellt wird, Folgendes umfasst:

Bestimmen der zu bestimmenden Position, indem eine Position im Zielbereich als Ausgangspunkt und ein festgelegter Abstand als Schrittgröße hergenommen wird; Bestimmen eines Abstands zwischen einer Antenne und einem Endgerät entsprechend jedem der zu positionierenden MR-Abtastwerte gemäß den Positionsinformationen, die in jedem der zu positionierenden MR-Abtastwerte beinhaltet sind, und den Positionsinformationen der zu bestimmenden Position; Bestimmen eines Abstands, der durch den TA dargestellt wird, der jedem der zu positionierenden MR-Abtastwerte entspricht; Bestimmen eines vorhergesagten Abstands zwischen einer Basisstation und der Zielzelle, die jedem der zu positionierenden MR-Abtastwerte entspricht, gemäß dem Abstand, der durch den TA, der jedem der zu positionierenden MR-Abtastwerte entspricht, dargestellt wird, und dem Abstand zwischen der Antenne und dem Endgerät, der jedem der zu positionierenden MR-Abtastwerte entspricht, um einen Satz von vorhergesagten Abständen zu bilden, die der zu bestimmenden Position entsprechen; und Bestimmen eines vorhergesagten Breitengrads und Längengrads der Zielzelle gemäß dem Satz der vorhergesagten Abstände.

**13.** Das Verfahren nach einem der Ansprüche 1 bis 9, weiter umfassend:

Bestimmen anderer Zellen, die zur gleichen Position wie die Zielzelle gehören; und
Bestimmen eines vorhergesagten Breitengrads und Längengrads, die einer Vielzahl von Zellen entsprechen, die zu derselben Position gehören, gemäß dem vorhergesagten Breitengrad und Längengrad, die der Zielzelle entsprechen, und einem vorhergesagten Breitengrad und Längengrad, die den anderen Zellen entsprechen.

14. Eine Vorrichtung, umfassend einen Prozessor und einen Speicher zum Speichern eines Computerprogramms, das auf dem Prozessor ausführbar ist; wobei,

der Prozessor das Verfahren zur Vorhersage eines Breitengrads und Längengrads einer Zelle gemäß einem der Ansprüche 1 bis 13 implementiert, wenn der Prozessor so konfiguriert ist, dass er das Computerprogramm ausführt, wobei
die Vorrichtung eine Basisstation oder ein Server ist.

15. Ein Computerlesbares Speichermedium, wobei ausführbare Anweisungen in dem Speichermedium gespeichert sind und die ausführbaren Anweisungen, wenn sie von einem Prozessor ausgeführt werden, das Verfahren zur Vorhersage eines Breitengrads und Längengrads einer Zelle gemäß einem der Ansprüche 1 bis 13 implementieren.


**Revendications**

1. Un procédé de prédiction d'une latitude et d'une longitude d'une cellule, comprenant :

la détermination (103) d'échantillons de rapport de mesure, MR, à positionner en fonction d'informations de position et/ou d'une avance temporelle, TA, correspondant à chacun des échantillons MR, dans lequel chaque échantillon MR est un échantillon MR qui porte des informations de système mondial de navigation par satellite, GNSS, d'une cellule cible dans une période définie, dans lequel les échantillons MR à positionner sont obtenus en excluant, des échantillons MR, des échantillons MR de trajets multiples et des échantillons MR qui portent des informations GNSS imprécises ;
la détermination (105) d'une zone cible comprenant la cellule cible en fonction des échantillons MR à positionner ;
la sélection (107) d'une position à déterminer en fonction de la zone cible, dans lequel la position à déterminer est une ou plusieurs positions dans la zone cible et utilisée pour déterminer une latitude et une longitude de la cellule cible, dans lequel les une ou plusieurs positions sont déterminées de manière séquentielle en traversant des positions dans la zone cible dans une taille de pas ; et
la prédiction (107) de la latitude et de la longitude de la cellule cible en fonction des informations de position portées dans chacun des échantillons MR à positionner, d'informations de position de la position à déterminer et d'une distance représentée par une TA correspondante dans chacun des échantillons MR à positionner.

2. Le procédé selon la revendication 1, dans lequel la détermination des échantillons MR à positionner en fonction des informations de position et/ou de la TA correspondant à chacun des échantillons MR comprend :

la détermination des échantillons MR avec des positions satisfaisant une condition définie et présentant des TA différentes pour former une pluralité d'ensembles MR en fonction des informations de position et de la TA correspondant à chacun des échantillons MR ; et
la réalisation d'un traitement d'élimination de duplication selon si la TA dans chaque ensemble MR satisfait une exigence définie.

3. Le procédé selon la revendication 1, dans lequel la détermination des échantillons MR à positionner en fonction des informations de position et/ou de la TA correspondant à chacun des échantillons MR comprend :

le prélèvement des échantillons MR respectivement comme des échantillons MR à identifier ;
la détermination d'une densité de distribution d'échantillons MR contenus à moins d'une première distance de seuil par rapport à un échantillon MR respectif à identifier en fonction des informations de position correspondant à l'échantillon MR respectif à identifier ; et
la détermination si éliminer l'échantillon MR respectif à identifier selon si la densité de distribution satisfait une condition définie.

4. Le procédé selon la revendication 1, dans lequel la détermination des échantillons MR à positionner en fonction des informations de position et/ou de la TA correspondant à chacun des échantillons MR comprend :

la rastérisation des échantillons MR et l'établissement d'une relation correspondante entre un échantillon MR respectif et une grille à laquelle appartient l'échantillon MR respectif ; et

la détermination d'une TA cible en fonction d'une proportion du nombre des échantillons MR dans une grille respective, la détermination d'échantillons MR cibles présentant chacun une confiance satisfaisant une exigence en fonction de la TA cible, et l'élimination d'autres échantillons MR à l'exception de l'échantillon MR cible dans la grille respective.

5. Le procédé selon la revendication 1, dans lequel la détermination des échantillons MR à positionner en fonction des informations de position et/ou de la TA correspondant à chacun des échantillons MR comprend :
la sélection d'un nombre défini d'échantillons MR cibles avec des TA relativement faibles dans un tri de TA en fonction de la TA correspondant à chacun des échantillons MR, et l'élimination d'autres échantillons MR à l'exception des échantillons MR cibles.

6. Le procédé selon la revendication 1, dans lequel la détermination des échantillons MR à positionner en fonction des informations de position et de la TA correspondant à chacun des échantillons MR comprend :

la rastérisation des échantillons MR et la détermination d'échantillons MR appartenant à une même grille qu'un ensemble MR ; et

la réalisation d'un traitement d'élimination de duplication sur d'autres échantillons MR dans le même ensemble MR à l'exception d'un échantillon MR avec une TA la plus petite.

7. Le procédé selon la revendication 6, dans lequel la détermination des échantillons MR à positionner en fonction des informations de position et de la TA correspondant à chacun des échantillons MR comprend en outre :

la sélection de n'importe quelle grille comme une grille initiale, et la détermination d'une position de la grille initiale ;

la détermination du nombre de grilles voisines contenues à moins d'une première distance de seuil par rapport à la position de la grille initiale, et l'élimination des échantillons MR contenus dans la grille initiale quand il est déterminé que le nombre de grilles voisines est inférieur à une valeur prédéfinie.

8. Le procédé selon la revendication 7, dans lequel la détermination des échantillons MR à positionner en fonction des informations de position et de la TA correspondant à chacun des échantillons MR comprend en outre :

le comptage d'une proportion de chacune des TA correspondant respectivement aux échantillons MR contenus dans chaque grille ; et

la détermination d'une TA cible en fonction de la TA avec la proportion la plus élevée, et l'élimination d'autres échantillons MR dans chaque grille à l'exception de l'échantillon MR correspondant à la TA cible.

9. Le procédé selon la revendication 8, dans lequel la détermination des échantillons MR à positionner en fonction des informations de position et de la TA correspondant à chacun des échantillons MR comprend en outre :

le tri des échantillons MR en fonction de la TA correspondant à chacun des échantillons MR ;

la détermination d'un nombre défini d'échantillons MR cibles, dans lequel des TA dans les échantillons MR cibles sont relativement faibles dans un tri ; et

l'élimination d'autres échantillons MR à l'exception des échantillons MR cibles.

10. Le procédé selon l'une quelconque des revendications 1 à 9, dans lequel la détermination d'une zone cible comprenant la cellule cible en fonction des échantillons MR à positionner comprend :

la détermination d'informations de position initiale et d'une pluralité d'échantillons MR de référence en fonction de la TA correspondant à chacun des échantillons MR à positionner ;

la détermination d'informations de position de référence en fonction d'une distance entre chacun de la pluralité d'échantillons MR de référence et des informations de position initiale ; et

l'extension d'une première distance de longitude et d'une première distance de latitude respectivement en fonction des informations de position de référence, et l'obtention de la zone cible comprenant la cellule cible en fonction d'une zone étendue.

11. Le procédé selon la revendication 10, dans lequel, avant l'extension de la première distance de longitude et de la première distance de latitude respectivement en fonction des informations de position de référence, le procédé comprend :

la conversion d'une distance représentée par chacune de TA correspondant à la pluralité d'échantillons MR de référence en une longitude et une latitude, et la détermination de la première distance de longitude et de la première distance de latitude en fonction des résultats de conversion.

12. Le procédé selon l'une quelconque des revendications 1 à 9, dans lequel la sélection de la position à déterminer en fonction de la zone cible, et la prédiction de la latitude et la longitude de la cellule cible en fonction des informations de position portées dans chacun des échantillons MR à positionner, des informations de position de la position à déterminer et de la distance représentée par la TA correspondante, comprend :

la détermination de la position à déterminer en prenant une position dans la zone cible comme un point d'origine et une distance définie comme la taille de pas ;
la détermination d'une distance entre une antenne et un terminal correspondant à chacun des échantillons MR à positionner respectivement en fonction des informations de position portées dans chacun des échantillons MR à positionner et des informations de position de la position à déterminer ;
la détermination d'une distance représentée par la TA correspondant à chacun des échantillons MR à positionner ;
la détermination d'une distance prédite entre une station de base et la cellule cible correspondant à chacun des échantillons MR à positionner en fonction de la distance représentée par la TA correspondant à chacun des échantillons MR à positionner et de la distance entre l'antenne et le terminal correspondant à chacun des échantillons MR à positionner, pour former un ensemble de distances prédites correspondant à la position à déterminer ; et
la détermination d'une latitude et d'une longitude prédites de la cellule cible en fonction de l'ensemble des distances prédites.

13. Le procédé selon l'une quelconque des revendications 1 à 9, comprenant en outre :

la détermination d'autres cellules appartenant à la même position que la cellule cible ; et
la détermination d'une longitude et d'une latitude prédites correspondant à de multiples cellules appartenant à la même position en fonction de la longitude et la latitude prédites correspondant à la cellule cible et d'une longitude et d'une latitude prédites correspondant aux autres cellules.

14. Un dispositif, comprenant un processeur et une mémoire pour stocker un programme d'ordinateur exécutable sur le processeur, dans lequel

le processeur met en oeuvre le procédé de prédiction d'une latitude et d'une longitude d'une cellule selon l'une quelconque des revendications 1 à 13 quand le processeur est configuré pour exécuter le programme d'ordinateur, dans lequel
le dispositif est une station de base ou un serveur.

15. Un support de stockage lisible par ordinateur, dans lequel des instructions exécutables sont stockées dans le support de stockage, et les instructions exécutables, quand elles sont exécutées par un processeur, mettent en oeuvre le procédé de prédiction d'une latitude et d'une longitude d'une cellule selon l'une quelconque des revendications 1 à 13.

FIG. 1

a MR sample to be positioned is determined according to position information and/or a timing advance (TA) corresponding to the MR sample, the MR sample being a MR sample carrying the GNSS information of a target cell in a set period

103

A target area including the target cell is determined according to the MR sample to be positioned

105

A position to be determined is selected according to the target area, and a latitude and longitude of the target cell is predicted according to the position information carried in the MR sample to be positioned, position information of the position to be determined, and a distance represented by the corresponding TA

107

FIG. 2

FIG. 3

FIG. 4

FIG. 5

TA=5
TA=4
TA=3
TA=2
TA=1
TA=0
Antenna

● Select MR where 0<=TA<=4

○ Unselect MR where TA>4

FIG. 6

FIG. 7

FIG. 8

A1:(Longitude_Min,Latitude_Min)
B1:(Longitude_Max,Latitude_Min)
C1:(Longitude_Min,Latitude_Max)
D1:(Longitude_Max,Latitude_Max)

FIG. 9

| The MR samples carrying GNSS information corresponding to the cell to be positioned are collected. | S11 |

| Multipath MRs with the same or similar positions are eliminated. | S12 |

| Stand-alone MRs with inaccurate longitude and latitude information are identified and eliminated. | S13 |

| Not-stand-alone MRs with inaccurate longitude and latitude information are identified and eliminated. | S14 |

| Multipath MR sample points with larger TA and higher probability of multipath propagation are eliminated. | S15 |

| A closed region including the actual position of the cell according to the data of the MR set to be positioned with accurate latitude and longitude of the cell and direct radiation path is obtained. | S16 |

| An objective function X=Distance_TA-Distance_AntennatoUE is set; when the latitude and longitude of the position to be determined is located at the actual position of the cell, the X calculated by each MR to be positioned is equal and a fixed value. | S17 |

| A point in the closed region is found by traversal and iterative method, so that when the predicted position of the cell is located at this point, the set of X calculated by each of the MR to be positioned with accurate latitude and longitude and direct radiation path is approximately equal. The latitude and longitude of this point are used as the result of the predicted latitude and longitude of the cell to be positioned. | S18 |

| When it is known that several cells belong to the same position, the prediction result of latitude and longitude is obtained by performing secondary processing according to the prediction result set of the latitude and longitude of the cell obtained by the cell set belonging to the same position. | S19 |

FIG. 10

S21 A target cell is selected, and a start time and an end time of collecting data are set.

S22 MR data carrying GNSS information of the target cell selected in step S21 within the set start time and end time are collected.

S23 The MR data carrying GNSS information of the cell is rasterized, and removal of duplication processing is performed on the sample points belonging to the same grid.

S24 A mapping relationship between each MR of the cell and a home grid is established.

S25 The density of the grid containing the MR of the cell within a certain distance around each grid containing the MR of the cell is calculated, and the MRs with inaccurate latitude and longitude and covering stand-alone points are identified and eliminated according to the density.

S26 The proportion of TA round number of the MR set of the cell in each grid of the cell in Table 1 after the processing of step S25 is counted and the MR that have inaccurate latitude and longitude and are stand-alone are identified and eliminated according to the TA round number with the highest proportion.

S27 A threshold m of the MR sample point to be positioned in the cell is set and the MR sample points with a relatively small TA value that reaches the sample point threshold m according to the TA value from small to large are selected.

S28 The smallest timing advance TA_min of the MR set to be positioned in the cell is obtained, and converted to distance Distance_min=TA_min*78.

S29 The average longitude longitude_center and the average latitude Latitude_center of the MR set to be positioned in the cell are calculated respectively.

S30 The MR sample points with the timing advance = TA_min in the MR set to be positioned in the cell is selected, and the number of sample points is denoted as n. The distance between all the MR sample points with the timing advance = TA_min and the (Longitude_Center, Latitude_Center) point is calculated respectively to obtain the reference position information.

S31 The smallest distance Distance_min corresponding to TA_min in the MR set to be positioned obtained in step S28 is converted into degree of longitude and latitude.

S32 Longitude obtained in step S30 scales out with Longitude_Distance to the east and west respectively, and Latitude obtained in step S30 scales out with Latitude_Distance to the north and south respectively to obtain the target area.

S33 The step size is set as Y meter, and converted to the corresponding degrees of longitude and latitude, which are denoted as Longitude_Y and Latitude_Y.

S34 Starting from setting the origin point in the target area, binary nested iteration is performed with Longitude_Y as the step size of the longitude, and Latitude_Y as the step size of the latitude.

S35 The horizontal distance Distance_Horizon between the latitude and longitude of the position to be determined obtained in the current iteration round and each longitude and latitude in the MR set to be positioned is calculated.

S36 The TA of each MR in the MR set to be positioned is converted into distance.

S37 The X=Distance_TA-Distance_AntennatoUE of each MR is calculated to form a set of predicted distances.

S38 The mean square error of the set of predicted distances for each iteration is calculated, and denoted as STDEV(X1..Xm)[i][j].

S39 After the iteration is completed, the latitude and longitude of multiple rounds with the smallest STDEV(X1..Xm)[i][j] in all iteration rounds are selected, and the predicted latitude and longitude of the cell is determined according to the mean value of the latitude and longitude of multiple rounds.

S40 When it is known that several cells are located at the same position, the predicted longitudes and latitudes of the cells located at the same position are averaged to obtain the predicted longitudes and latitudes of the multiple cells located at the same position.

FIG. 11

Sample screening module 13

Position determining module 15

Prediction module 17

FIG. 12

FIG. 13

**REFERENCES CITED IN THE DESCRIPTION**

**Patent documents cited in the description**

- CN 103858462